# EUROPEAN PATENT SPECIFICATION

(11) **EP 1 889 316 B1**
(45) Date of publication and mention of the grant of the patent: **16.05.2012**
(21) Application number: 06732340.2
(22) Date of filing: 19.04.2006
(51) Int. Cl.: H01M 8/02, H01M 8/10

(54) **ELECTROLYTE MEMBRANE-ELECTRODE ASSEMBLY AND METHOD FOR PRODUCTION THEREOF**
ELEKTROLYT-MEMBRAN-ELEKTRODEN-BAUGRUPPE UND ZUGEHÖRIGES HERSTELLUNGSVERFAHREN
ENSEMBLE D'ÉLECTRODE À MEMBRANE ÉLECTROLYTE ET SON PROCÉDÉ DE PRODUCTION

(30) Priority: 31.05.2005 JP 2005160030; 31.05.2005 JP 2005160033; 10.01.2006 JP 2006002925
(43) Date of publication of application: 20.02.2008
(73) Proprietor: NISSAN MOTOR CO., LTD., Yokohama-shi, Kanagawa 220-8623 (JP)
(72) Inventor: OHMA, Atsushi c/o Intellectual Property Dpt. Nissan Motor Co Ltd, Kanagawa 243-0192 (JP); SUGA, Sohei c/o Intellectual Property Dpt. Nissan Motor Co Ltd, Kanagawa 243-0192 (JP); TANAKA, Hiroyuki c/o Intellectual Property Dpt. Nissan Motor Co Ltd, Kanagawa 243-0192 (JP); OKI, Shunsuke c/o Intellectual Property Dpt. Nissan Motor Co Ltd, Kanagawa 243-0192 (JP); YAMAMOTO, Shinji c/o Intellectual Property Dpt. Nissan Motor Co Ltd, Kanagawa 243-0192 (JP)
(74) Representative: Schaeberle, Steffen
(86) International application number: PCT/JP2006/308684
(87) International publication number: WO 2006/129436

(56) References cited:
- EP-A- 1 289 042
- WO-A-92/22096
- WO-A-2005/029620
- US-A1- 2004 067 407
- US-A1- 2005 100 776

## Description

### Technical Field:

The present invention relates to an electrolyte membrane-electrode assembly (MEA), in particular relates to an electrolyte membrane-electrode assembly for a fuel cell, and a method for producing the same. In particular, the present invention relates to an electrolyte membrane-electrode assembly (MEA) wherein corrosion of a cathode catalyst on start/stop and continuous operation, and decomposition of an electrolyte membrane on retention of OCV (Open Circuit Voltage) envisioning idle stop operation can be suppressed, and a method for producing the same.

### Background Art:

Recently, in response to social needs or movement with the background of energy and environmental issues, a fuel cell which can operate even at normal temperature and provide high output density has been noticed as power source for an electric automobile and stationary power source. A fuel cell is a clean power generation system wherein a product by an electrode reaction is principally water and thus provides little adverse effects on global environment. In particular, because of operability at relatively low temperature, a solid polymer type fuel cell is expected as electric source for an electric automotive. A solid polymer type fuel cell generally has such structure that an electrolyte membrane-electrode assembly is sandwiched with gas diffusion layers and further with separators. An electrolyte membrane-electrode assembly has such structure that a polymer electrolyte membrane is sandwiched with a pair of electrode catalytic layers.

In such solid polymer type fuel cell having the MEA as described above, the following electrochemical reaction proceeds. First, hydrogen contained in fuel gas fed to an anode is converted to protons and electrons by oxidation with a catalyst component (2H₂ → 4H⁺+4e⁻). Then, the resultant protons pass through a solid polyelectrolyte contained in an electrode catalytic layer, and then through a polymer electrolyte membrane contacting with the electrode catalytic layer, and reach an electrode catalytic layer of cathode. In addition, the electrons generated at the electrode catalytic layer of anode pass through a conductive carrier forming the electrode catalytic layer, and further a gas diffusion layer contacting with the electrode catalytic layer on the opposite side of the polymer electrolyte membrane, a separator and external circuit, to reach an electrode catalytic layer of cathode. Then, the protons and electrons reaching an electrode catalytic layer of cathode react with oxygen contained in oxidizing agent gas fed to anode, to generate water (O₂ + 4H⁺ +4e⁻ → 2H₂O). In a fuel cell, electricity can be taken out through the electrochemical reaction as described above.

In such an MEA, there has been conventionally a problem of generation of membrane fracture due to receiving too high mechanical stress exerted on a membrane, resulting in insufficient cell life. To solve this problem, the reinforcement of a membrane by sealing the edge region of an MEA has been proposed in JP-A-5-242897, JP-A-5-21077, JP-A-10-172587, and JP-A-2004-39385. JP-A-5-242897 discloses that a peripheral part of a electrode of a solid polymer electrolyte membrane and a peripheral part of a solid polymer electrolyte membrane not located with an electrode are covered with a reinforcing membrane, and a gas seal part is provided at a peripheral outer part of a solid polymer electrolyte membrane, for the purpose of enhancing mechanical strength of the peripheral outer part of a solid polymer electrolyte membrane and preventing fracture of a solid polymer electrolyte membrane. In addition, JP-A-5-21077 discloses that, aiming at preventing fracture of a solid polymer electrolyte membrane caused by pressure difference of reaction gas or mechanical stress exerted to a solid polymer electrolyte membrane, a frame-like protection membrane is formed at a peripheral part of a solid polymer electrolyte membrane so as to cover both gas sealing member and the peripheral part of the electrode. JP-A-10-172587 discloses that by suitably providing a frame-like reinforcing sheet to change areas of a fuel electrode and an oxidizing agent electrode each contacting with a membrane (claims 4 to 6), polymerization of each catalytic layer sandwiching a membrane can be prevented and thus membrane fracture can be prevented. According to the method, it has been described that, cell life can be improved by prevention of membrane fracture caused by mechanical stress exerted to a membrane, and by means of smooth discharge of generated waster. JP-A-2004-39385 discloses that a seal is inserted between a peripheral outer part of a catalytic layer with area thereof changed and a separator, and the peripheral outer part of the catalytic layer has been subjected to compression treatment in advance in response to the contact surface of the seal, aiming at inhibition of collapse of porous carbon material forming an electrode.

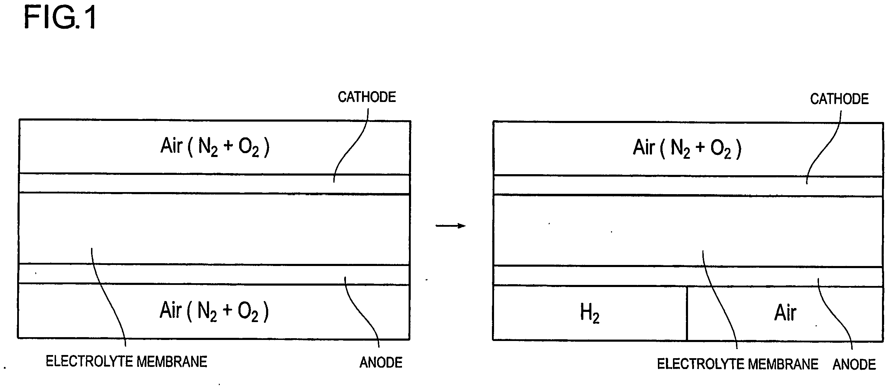

In addition, JP-A-5-21077 discloses that, in a fuel cell using an acid as an electrolyte, in particular, in a phosphoric acid-type fuel cell, carbon corrosion of a cathode catalytic layer is suppressed by providing a layer composed of water resistant material at the edge region of a cathode catalytic layer, or making coating area of an anode catalytic layer larger than that of a cathode catalytic layer, to suppress deterioration of a catalytic layer. Specifically, JP-A-5-21077 discloses that powders of a fluorocarbon resin such as fluoroethylene propylene (FEP) are carried on a electrolyte matrix in an amount of 0.2 g/cc per unit volume to form a layer so as to contact with the edge part of a cathode catalytic layer side (see paragraph [0024] and Fig. 1).

### Disclosure of Invention:

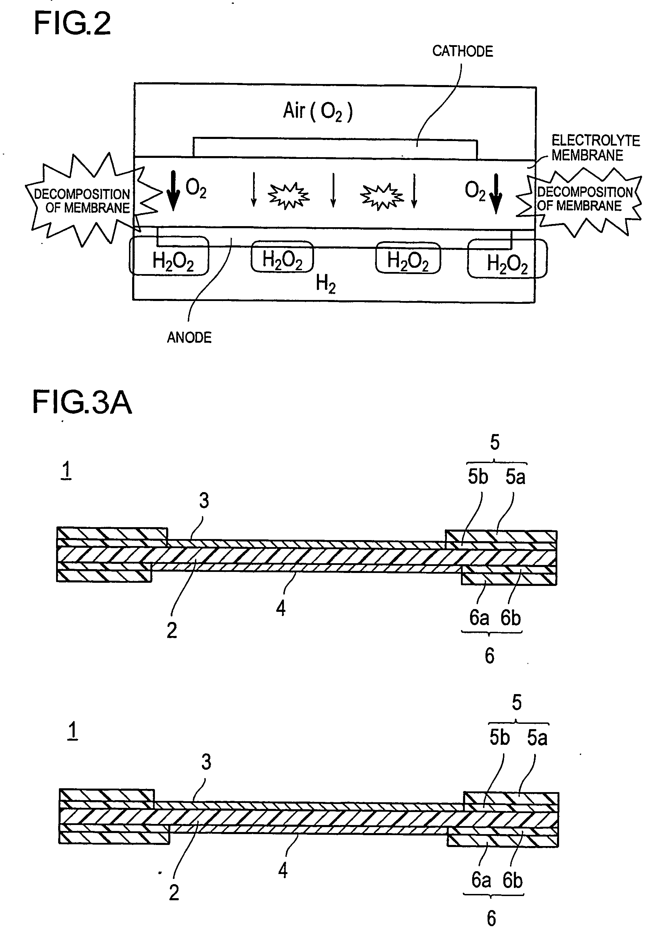

The solid polymer type fuel cell as described above conventionally have had various problems. As one of the typical and important problem is deterioration of an electrolyte membrane in idle stop state (OCV: Open Circuit Voltage). A mechanism of this deterioration can be explained by referring to Fig. 2. Specifically, because an electrolyte membrane does not block gas completely (in impermeable state), a little amount of hydrogen permeates (diffuses by dissolution) from an anode toward a cathode, while a little amount of oxygen or nitrogen from a cathode toward an anode, depending on concentration gradient (partial pressure) of oxygen or hydrogen gas (such phenomenon is referred also to as "cross-leak"). In particular, in OCV, because oxygen concentration at the interface between a cathode and an electrolyte membrane is high compared with that in power generation, an amount of oxygen diffused by dissolution from a cathode to an anode through an electrolyte membrane also increases compared with that in power generation. Therefore, oxygen transfers from a cathode to an anode by cross-leak, and oxygen directly reacts with hydrogen at an anode side to induce a reaction of H₂ + O₂ → H₂O₂, to generate hydrogen peroxide (H₂O₂). At the same time, hydrogen transfers from an anode to a cathode, and hydrogen directly reacts with oxygen at a cathode to similarly generates hydrogen peroxide. This hydrogen peroxide has been known to decompose an electrolyte component (ionomer) contained in an electrolyte membrane or an anode or a cathode, and chemically deteriorate an electrolyte membrane. Here, in consideration of relationship of potential between an anode catalytic layer and a cathode catalytic layer with a decomposition reaction of hydrogen peroxide, since an oxygen at the vicinity of a cathode directly reacts with hydrogen cross-leaked from an anode catalytic layer on a cathode side with relatively higher potential (about 0.6 to 1 V) based on electrolyte potential, hydrogen peroxide generated relatively quickly decomposes into oxygen and protons by a reaction of H₂O₂ → O₂ + 2H⁺ + 2e⁻. On the other hand, because of low potential on an anode side, such a decomposition reaction of hydrogen peroxide as above is difficult to occur. Therefore, hydrogen peroxide generated in high quantity on an anode side transfers into an electrolyte membrane by concentration diffusion, and deteriorates an electrolyte membrane by oxidation, or deteriorates, in accelerated rate, a component of an electrolyte membrane, by the presence of a cation (for example, Fe²⁺ or Cu²⁺) in an electrolyte membrane. In particular, in the case when positions of an anode catalytic layer and a cathode catalytic layer formed are not coincide completely to induce displacement, because oxygen fed to a cathode catalytic layer directly transfers to an anode catalytic layer in the region wherein a cathode catalytic layer is not present and only an anode catalytic layer is present, cross-leak amount of oxygen increases. Further, since hydrogen peroxide is relatively rich in such a region, deterioration of an electrolyte membrane further progresses in the peripheral part, compared with a region (center part) wherein an anode catalytic layer is present.

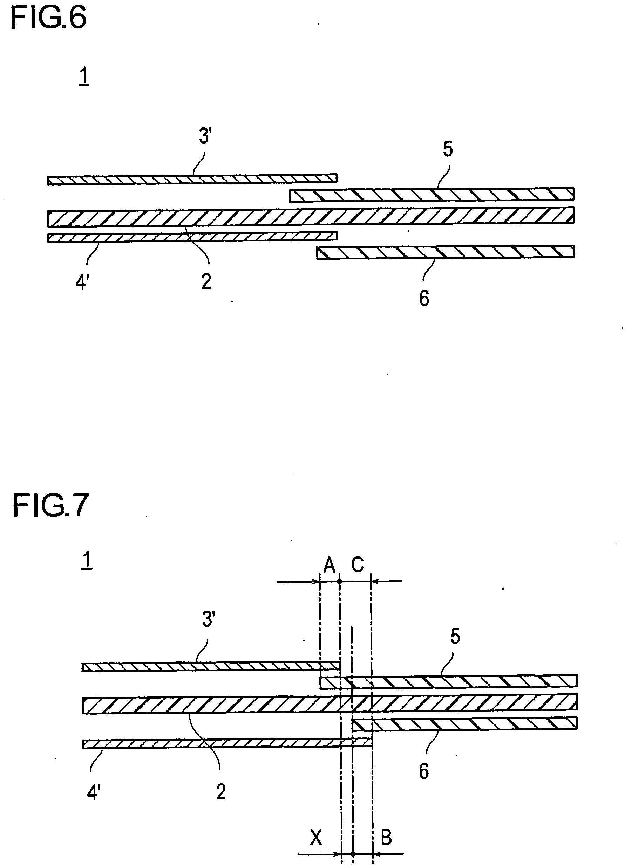

This problem has been relatively recently raised. Although a means to solve the problem has been strongly.desired at present, effective means has not been found up to date. Practically, for these problems, the JP-A-5-242897, JP-A-5-21077, JP-A-10-172587, and JP-A-2004-39385 as cited above have not disclosed or suggested at all. In fact, JP-A-5-242897, and JP-A-5-21077 aim at improvement of mechanical strength of the peripheral part of a solid polymer electrolyte membrane. Because in such structure as described therein, there is no consideration on suppression of decomposition of an electrolyte membrane as above, problems of not only deterioration of an electrolyte membrane caused by the oxygen cross-leak but also corrosion of a catalyst as described in JP-A-5-21077 and resulting in lowering of durability of an MEA could not be dissolved, when displacement of catalytic layers is present in the thickness direction of an MEA. In addition, although JP-A-10-172587 discloses that area of a catalytic layer is changed at a fuel electrode (anode) and an oxidizing agent electrode (cathode), in paragraph [0036] and Figs. 6, 7 and 12 to 14, area of a catalytic layer is set to be smaller in a fuel electrode (anode) than in an oxidizing agent electrode (cathode). Accordingly, an MEA having such a catalytic layer cannot solve a corrosion problem of a carbon carrier in a cathode catalytic layer, and a deterioration problem of an electrolyte membrane in idle stop state. Furthermore, although JP-A-2004-39385 states that area of an anode catalytic layer is larger than area of a cathode catalytic layer (paragraph [0018]), the aim of the composition is to improve sealing performance of an MEA and a separator. Further, there is no description on area ratio between area of an anode catalytic layer and area of a cathode catalytic layer.

In addition, although JP-A-5-21077 has described exactly on corrosion of a carbon carrier in a catalytic layer, the target is a fuel cell, in particular a fuel cell using an acid such as phosphoric acid as an electrolyte, therefore, there is no consideration on deterioration of an electrolyte. Therefore, although a layer is formed by carrying powders of a fluorocarbon-based resin as they are, because this layer is gas permeable and does not function as a gasket, oxidative deterioration of an electrolyte membrane can be induced by diffusion of oxygen cross-leaked from the vicinity of a cathode to an anode and direct reaction with hydrogen at the vicinity of an anode and generation of a large quantity of hydrogen peroxide, even if this is applied to an electrolyte membrane-electrode assembly of a solid polymer type fuel cell. Namely, because cross-leak of oxygen from a cathode cannot sufficiently be suppressed due to presence of the carrier layer, oxidative deterioration of an electrolyte membrane caused by generation of hydrogen peroxide also cannot sufficiently be suppressed and prevented.

Therefore, the present invention has been proposed in view of these circumstances and aims at providing an electrolyte membrane-electrode assembly which enables to effectively suppress decomposition of an electrolyte membrane in OCV retention.

In addition, another obj ect of the present invention is to provide a method for producing an electrolyte membrane-electrode assembly, which enables to easily and accurately locate a cathode catalytic layer and an anode catalytic layer with desired size, at desired position on a polymer electrolyte membrane.

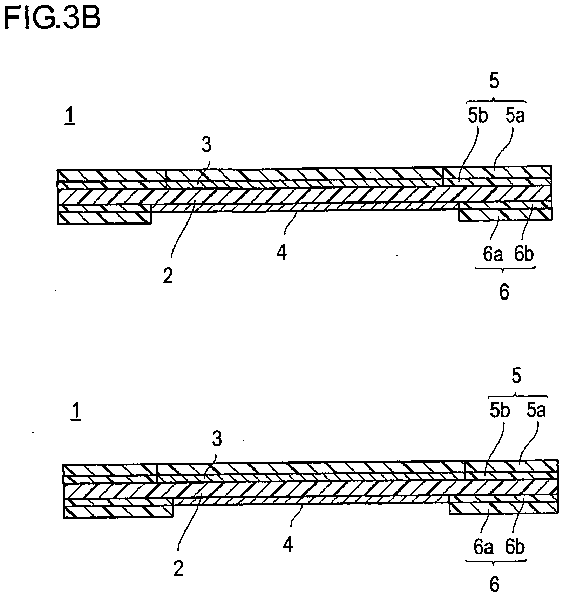

The present inventors have comprehensively studied a way to attain these objects, to find that sizes of an anode catalytic layer and a cathode catalytic layer can easily be controlled and also position of each catalytic layer to be located can be easily adjusted, by forming a gasket layer at the end part of a cathode catalytic layer, preferably at the end parts of a cathode catalytic layer and an anode catalytic layer. In addition, it was also found that, by sealing the end part of a catalytic layer with a gas impermeable gasket layer so that the size of the an anode catalytic layer is made larger than a cathode catalytic layer, tomake area of a cathode catalytic layer (an effective cathode catalytic layer) effectively acting as a catalyst, namely causing reaction of O₂ + 4H⁺ +4e⁻ → 2H₂O during operation (power generation), smaller than area of an anode catalytic layer (en effective anode catalytic layer) effectively acting as a catalyst, namely causing reaction of 2H₂ → 4H⁺ +4e⁻ in operation (power generation), and further by covering the end region of a cathode catalytic layer wherein oxygen cross-leak from a cathode catalytic layer to an anode catalytic layer particularly easily occurs to induce oxidative deterioration of an electrolyte membrane, with a gas impermeable gasket layer, area in which the cross-leak generates can be minimized, and total cross-leak amount of oxygen can be suppressed to minimum, and thus oxidative deterioration of an electrolyte membrane can effectively be suppressed. In more specifically, as shown in Fig. 3A, in both of an MEA 1 (shown in upper part of Fig. 3A) having an effective cathode catalytic layer 3 with a size of 25 cm² and an effective anode catalytic layer 4 with a size of 26 cm², and an MEA 1 (shown in lower part of Fig. 3A) having an effective cathode catalytic layer 3 with a size of 26 cm² and a an effective anode catalytic layer 4 with a size of 25 cm², area of an effective catalytic layer when the MEA 1 is assembled into a fuel cell stack is defined as a smaller area, namely 25 cm². On the other hand, as for cross-leak of oxygen, because oxygen cross-leaks from a cathode catalytic layer to an anode catalytic layer, cross-leak of oxygen depends on area of an effective cathode catalytic layer. Namely, as is shown in Fig. 3B, in the MEA 1 (shown in upper part of Fig. 3B) having an effective cathode catalytic layer 3 with a size of 25 cm² and an effective anode catalytic layer 4 with a size of 26 cm², area in which cross-leak of oxygen is generated is 25 cm². On the other hand, in an MEA 1 (shown in lower part of Fig. 3B) having an effective cathode catalytic layer 3 with a size of 26 cm² and an effective anode catalytic layer 4 with a size of 25 cm², area in which cross-leak of oxygen is generated is 26 cm². In the Figs. 3A and 3B, symbol 5 stands for a first gasket layer, 5a for a first gas impermeable layer, 5b for a first adhesive layer, 6 for a second gasket layer, 6a for a second gas impermeable layer, 6b for a second adhesive layer. In the accompanied figures, the same number represents the same member. Accordingly, an MEA of upper part of Figs. 3A and 3B having the same area of an effective catalytic layer as area in which cross-leak of oxygen is generated can significantly suppress oxygen cross-leak from a cathode catalytic layer to an anode catalytic layer, and thus oxidative deterioration of an electrolyte membrane 2, compared with an MEA of lower part of Figs. 3A and 3B having area of an effective catalytic layer smaller than area in which cross-leak of oxygen is generated.

Furthermore, the present inventors have also found that, by adopting the structure as above and at the same time, by sealing the peripheral part wherein a cathode catalytic layer is not present and only an anode catalytic layer is present, with a gas impermeable gasket layer, oxygen cross-leak from a cathode to an anode, particularly significantly occurring at the end part of a cathode catalytic layer, and thus generation of hydrogen peroxide at the corresponding region on an anode side can meaningfully be suppressed and thus deterioration of an electrolyte membrane can effectively be prevented and suppressed.

In addition to the knowledge, the present inventors have found that by using adhesive (in particular, hot-melt type adhesive) in forming a gasket layer at the end part or the peripheral part of a catalytic layer, sealing with a gasket layer and formation of a gasket layer can be carried out in high precision..

Based on the knowledge, the present invention has been completed.

Specifically, the objects can be attained by an electrolyte membrane-electrode assembly which comprises a polymer electrolyte membrane, a cathode catalytic layer located at one side of the polymer electrolyte membrane, an anode catalytic layer located at the other side of the polymer electrolyte membrane, and a first gasket layer formed in a frame like and overlapse with the end part of the cathode catalytic layer to define an area of the effective cathode catalytic layer so that area of the effective anode catalytic layer is made larger than area of the effective cathode catalytic layer which further comprises a second gasket layer formed at the end part of the anode catalytic layer, wherein the length A of the overlapped part between the end part of the cathode catalytic layer and the first gasket layer is 0.2 mm≤A≤2.0 mm, the length B of the overlapping part between the end part of the anode catalytic layer and the second gasket layer is 0.2 mm≤B≤2.0 mm, and the length C between the outer end part of the cathode catalytic layer and the outer end part of the anode catalytic layer in the thickness direction of an electrolyte membrane-electrode assembly, is 2.1 mm≤C≤4.0 mm.

In addition, the objects can be attained also by an electrolyte membrane-electrode assembly which comprises a polymer electrolyte membrane, a cathode catalytic layer located at one side of the polymer electrolyte membrane, an anode catalytic layer located at the other side of the polymer electrolyte membrane, and a first gasket layer comprising a first gas impermeable layer and a first adhesive layer formed thereon and formed at least at the end part or the peripheral part of the cathode catalytic layer, wherein area of the anode catalytic layer is made larger than area of the cathode catalytic layer.

The above and other objects, features and advantages of the present invention will become clear from the following description of the preferred embodiments.

### Brief Description of Drawings:

Fig. 1 is a section of MEA illustrating gas atmosphere of anode/cathode after a long period of out-of-service, and gas atmosphere and local battery state of anode/cathode on start-up after a long period of out-of-service.
Fig. 2 is a section of MEA illustrating cross-leak of oxygen during OCV retention.
Figs. 3A and 3B are a section of MEA illustrating suppression of oxygen cross-leak during OCV retention according to the present invention.
Fig. 4 is a section illustrating structure of MEA according to the first embodiment of the present invention.
Fig. 5 is a section illustrating structure of MEA according to the second embodiment of the present invention.
Fig. 6 is a section illustrating structure of MEA according to the third embodiment of the present invention.
Fig. 7 is a section illustrating structure of MEA according to the fourth embodiment of the present invention.
Fig. 8 is a section illustrating structure of MEA according to the fifth embodiment of the present invention.
Fig. 9 is a section illustrating structure of MEA according to the sixth embodiment of the present invention.
Fig. 10 is a section illustrating structure of MEA according to the seventh embodiment of the present invention.
Fig. 11 is a section illustrating a process for producing an MEA according to the first embodiment in the fifth aspect of the present invention.
Fig. 12 is a section illustrating a process for producing an MEA according to the second embodiment in the fifth aspect of the present invention.
Fig. 13 is a section illustrating a process for producing an MEA according to the third embodiment in the fifth aspect of the present invention.
Fig. 14 is a section illustrating a process for producing an MEA according to the fourth embodiment in the fifth aspect of the present invention.
Fig. 15 is a section illustrating a process for producing an MEA according to the fifth embodiment in the fifth aspect of the present invention.
Fig. 16 is a section of MEA produced by the process shown in Fig. 14 or Fig. 15.
Fig. 17 is a section illustrating a process for producing an MEA according to the sixth embodiment of the present invention.
Fig. 18 is a section of MEA produced in Example 1.
Fig. 19 is a section of MEA produced in Comparative Example 1.
Fig. 20 is a section of MEA produced in Comparative Example 2.
Fig. 21 is a section of MEA produced in Comparative Example 3.
Fig. 22 is a section of MEA produced in Comparative Example 4.
Fig. 23 is a graph illustrating results of OCV duration test in Example 2.
Fig. 24 is a section of MEA produced in Example 3.
Fig. 25 is a section of MEA produced in Example 4.
Fig. 26 is a graph illustrating results of OCV duration test in Example 5.
Fig. 27 is a section of end part of MEA produced in Example 3.
Fig. 28 is a section of end part of MEA produced in Example 4.
Fig. 29 is a graph illustrating results of OCV duration test in Example 7.
Fig. 30 is a section of end part of MEA produced in Example 5.
Fig. 31 is a section of end part of MEA produced in Example 6.
Fig. 32 illustrates positions of an effective cathode catalytic layer, an effective anode catalytic layer, a cathode catalytic layer and an anode catalytic layer in the MEA of the present invention.
Fig. 33 is a section illustrating comparison between an ink with propylene glycol (PG) and an ink without propylene glycol (PG) used in a catalytic layer of MEA of the present invention about effects of suppressing and preventing crack therein..

### Best Mode for Carrying Out the Invention:

According to the first aspect of the present invention, an electrolyte membrane-electrode assembly is to be provided which comprises a polymer electrolyte membrane, a cathode catalytic layer located at one side of the polymer electrolyte membrane, an anode catalytic layer located at the other side of the polymer electrolyte membrane, and a first gasket layer formed at the end part of the cathode catalytic layer so that area of the effective anode catalytic layer is made larger than area of the effective cathode catalytic layer. In the present specification, a gasket layer formed and located at the end part of a cathode catalytic layer is simply called as "a first gasket layer".

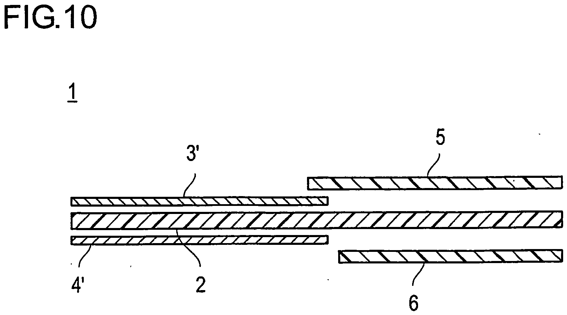

In the present specification, "an effective anode catalytic layer" means a region of an anode catalytic layer, wherein a reaction of 2H₂ → 4H⁺ +4e⁻ occurs during operation (power generation), specifically a region of an anode catalytic layer which is not overlapped with a gasket layer. Incidentally, "an anode catalytic layer" means an entire region of an anode catalytic layer formed on a polymer electrolyte membrane, namely, it consists of a region of an anode catalytic layer which is overlapped with a second gasket layer, as well as the effective anode catalytic layer. As for an anode catalytic layer, a case wherein the second gasket layer and an anode catalytic layer do not overlap is also present. In this case, "an effective anode catalytic layer" and "an anode catalytic layer" become the same. As such an example, one shown in Fig. 10 may be included. In more detail, as shown in Fig. 10, the anode catalytic layer 4' and the second gasket layer 6 are located with the opposing end parts present in separate state, on an electrolyte membrane 2. In such a case, the anode catalytic layer 4' formed on the electrolyte membrane 2 forms an effective anode catalytic layer as it is.

In addition, in the present specification, "an effective cathode catalytic layer" means a region of a cathode catalytic layer wherein a reaction of O₂ + 4H⁺ +4e⁻ → 2H₂O occurs during operation (power generation), specifically a region of a cathode catalytic layer which is not overlapped with a gasket layer. Incidentally, "a cathode catalytic layer" means an entire region of a cathode catalytic layer formed on a polymer electrolyte membrane, namely, it consists of a region of a cathode catalytic layer which is overlapped with a first gasket layer, as well as the effective cathode catalytic layer.

An electrolyte membrane-electrode assembly (hereinafter referred also to as simply "MEA") of the present invention is characterized in that at least the end part of a cathode catalytic layer, preferably both end parts of a cathode catalytic layer and an anode catalytic layer are sealed with a gas impermeable gasket layer, so that area of an effective anode catalytic layer is made larger than area of an effective cathode catalytic layer. In the present specification, "area" means geometric area and does not mean surface area of a catalyst, and the like. By adopting such construction, because area of a cathode catalytic layer region opposing to a region wherein air is present at the downstream of an anode can be reduced, namely, a part with large difference between electrolyte potential and cathode potential can significantly be reduced, carbon corrosion of a cathode catalytic layer can effectively be prevented and suppressed. In addition, because at least the end part of a cathode catalytic layer (preferably both end parts of a cathode catalytic layer and an anode catalytic layer) are sealed with a gas impermeable gasket layer, a cathode catalytic layer wherein cross-leak of oxygen particularly remarkably occurs, is not present, or such a cathode catalytic layer region can meaningfully be reduced. Therefore, the MEA of the present invention has little or no peripheral part wherein only a cathode catalytic layer is little present, and thus cross-leak of oxygen from a cathode to an anode little occurs or completely not occurs at the end part of a cathode catalytic layer. Consequently, deterioration of an electrolyte membrane, a conventional serious problem, can also effectively be prevented and suppressed. By this, a fuel cell using the electrolyte membrane-electrode assembly of the present invention can maintain performance on start/stop and continuous operation and on OCV, for a long time, and also improve fuel cost. Furthermore, the MEA of the present invention features in that a gasket layer composes a gas impermeable layer and a adhesive layer formed thereon. By using such adhesive, as described in detail below in a section of a method for production, gap between the end part of a catalytic layer and a gasket layer can be sealed firmly (in low gas permeation rate). Therefore, according to the present invention, an MEA with high reliability can be provided.

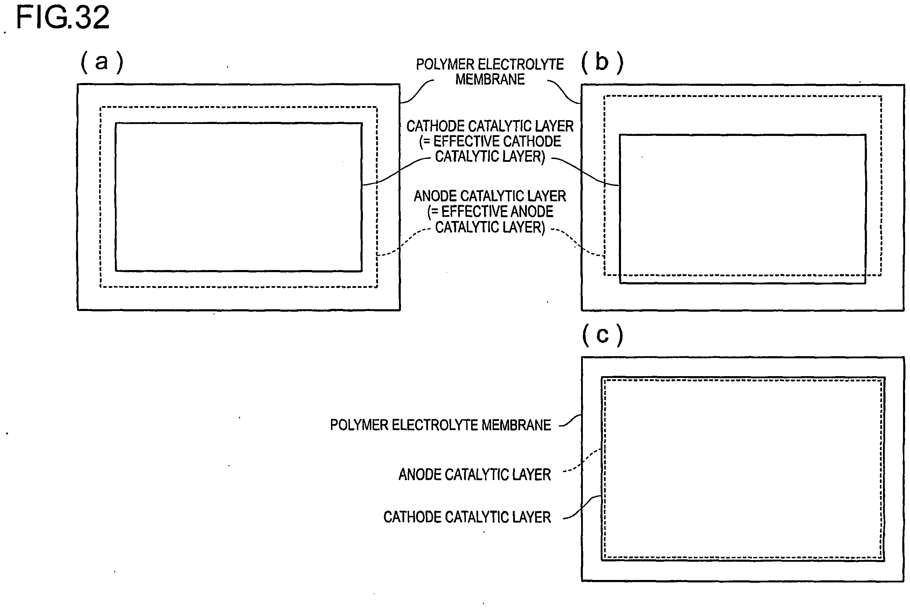

In the present invention, it is essential that area of an effective anode catalytic layer is made larger than area of an effective cathode catalytic layer. In this case, relative position of an effective anode catalytic layer and an effective cathode catalytic layer is not especially limited, and any of the following cases may be included: a case as shown by Fig. 32 (a), wherein an effective cathode catalytic layer is completely included in an effective anode catalytic layer in the thickness direction of an MEA; or a case as shown by Fig. 32 (b), wherein an effective cathode catalytic layer is partially included in an effective anode catalytic layer in the thickness direction of an MEA. Among these, the former case is preferable. Similarly, relative position of each catalytic layer is not especially limited, and any of the following cases may be included: a case as shown by Fig. 32 (a), wherein a cathode catalytic layer is completely included in an anode catalytic layer in the thickness direction of an MEA; a case as shown by Fig. 32 (b), wherein a cathode catalytic layer is partially included in an anode catalytic layer in the thickness direction of an MEA; or a case as shown by Fig. 32 (c), wherein a cathode catalytic layer is located at the same position as an anode catalytic layer in the thickness direction of an MEA. Among these, the case wherein a cathode catalytic layer is located at the same position as an anode catalytic layer, and the case wherein a cathode catalytic layer is completely included in an anode catalytic layer are preferable.

In the present invention, the first gasket layer is formed on a polymer electrolyte membrane in the direction from the peripheral part of a cathode catalytic layer toward the outside, so that it overlaps or contacts with the peripheral part of a cathode catalytic layer. By adapting such a structure, deterioration of a polymer electrolyte membrane can effectively be prevented and suppressed. In addition, relative position between the end part of a cathode catalytic layer and the first gasket layer is not especially limited, so long as permeation of gas, in particular oxygen gas, can be sufficiently suppressed at the end part of a cathode catalytic layer. For example, such a relative position can preferably be used that the end part of the first gasket layer is inserted between the cathode catalytic layer and the polymer electrolyte membrane, so that the end part of the first gasket layer is covered with the end part of a cathode catalytic layer; and the first gasket layer is formed so as to cover the end part of a cathode catalytic layer. In the present invention, the first gasket layer is formed so as to cover at least a part of the peripheral part of an electrolyte membrane, but it is preferable that gas sealing performance at the peripheral part can be maintained, in view of improvement of fuel cost by suppression of hydrogen cross-leak at the end part of an anode catalytic layer. Accordingly, the first gasket layer is formed in frame-like, along the whole peripheral part of an electrolyte membrane.

In the present invention, it is essential that the first gasket layer is formed at the end part of a cathode catalytic layer, and it is further essential that a gasket layer is further formed at the end part or the peripheral part of an anode catalytic layer. As used herein, "to form a gasket layer at the end part" means that a cathode catalytic layer/an anode catalytic layer overlaps with the first gasket layer/the second gasket layer in the thickness direction, respectively, or the end parts of a cathode catalytic layer/an anode catalytic layer are located adjacently to the end parts of the first gasket layer/the second gasket layer, respectively, which results in no formation of gap between the inner end part of a catalytic layer and the end part of a gasket layer. By such structure, deterioration of a polymer electrolyte membrane can be prevented and suppressed. On the other hand, "to form a gasket layer at the peripheral part" means that an anode catalytic layer does not overlap with the second gasket layer in the thickness direction. Namely, as a preferable embodiment of the MEA of the present invention, an electrolyte membrane-electrode assembly which comprises a cathode catalytic layer, an polymer electrolyte membrane and an anode catalytic layer, wherein a first gasket layer is formed at least at a part of a cathode catalytic layer, and a second gasket layer is formed at least at a part of the end part of an anode catalytic layer, and the first gasket layer and the second gasket layer are formed at the end parts of the cathode catalytic layer and the anode catalytic layer, so that area of the anode catalytic layer region not formed with the second gasket layer is made larger than area of the cathode catalytic layer region not formed with the first gasket layer. It is because, by forming a gasket layer also at the end part of the anode catalytic layer, position between an effective cathode catalytic layer and an effective anode catalytic layer can be adjusted correctly and easily, and carbon corrosion of a cathode catalyst on start/stop and continuous operation or decomposition of an electrolyte membrane on OCV retention can effectively be prevented and suppressed. In the present specification, a gasket layer formed at the end part of an anode catalytic layer is simply referred to as "a second gasket layer".

In this case, the second gasket layer is desirably formed on a polymer electrolyte membrane from the peripheral part of an anode catalytic layer toward the outer side, so that it overlaps with at least one part of the end part of an anode catalytic layer. However, it is preferably formed on entire region of the end part of an anode catalytic layer, in view of easiness of adjusting position between a cathode catalytic layer and an anode catalytic layer, or sealing performance of gas (hydrogen or oxygen). In this case, relative position between the end part of an anode catalytic layer and the second gasket layer is not especially limited, so long as gas permeation at the end part of an anode catalytic layer can be sufficiently suppressed. For example, the following relations can preferably be used: the second gasket layer is inserted between an anode catalytic layer and a polymer electrolyte membrane, so that the end part of the second gasket layer is covered with the end part of an anode catalytic layer; and the second gasket layer is formed so as to cover the end part of an anode catalytic layer. In the present invention, the second gasket layer is formed so as to cover at least a part of the peripheral part of an electrolyte membrane, but it is preferable that gas sealing performance at the peripheral part can be maintained, in view of improvement of fuel cost by suppression of hydrogen cross-leak at the end part of an anode catalytic layer. Accordingly, the second gasket layer is also preferably formed in frame-like, along the whole peripheral part of an electrolyte membrane, similarly as in the case of the first gasket layer.

Combination in forming the first gasket layer and the second gasket layer is not especially limited, and it may be any of the combinations of the preferable examples above. Preferably, the following combinations are preferable: (1) the first gasket layer is formed between the cathode catalytic layer and the polymer electrolyte membrane so as to be covered with the end part of the cathode catalytic layer, and the second gasket layer is formed between the anode catalytic layer and the polymer electrolyte membrane so as to be covered with the end part of the anode catalytic layer; (2) the first gasket layer is formed so as to cover the end part of the cathode catalytic layer, and the second gasket layer is formed so as to cover the end part of the anode catalytic layer; or (3) the first gasket layer is formed between the cathode catalytic layer and the polymer electrolyte membrane so as to be covered with the end part of the cathode catalytic layer, and the second gasket layer is formed so as to cover the end part of the anode catalytic layer. Among these combinations, insertion of at least one of the first gasket layer or the second gasket layer, between an anode catalytic layer and/or a cathode catalytic layer and an electrolyte membrane is preferable, in view of effective prevention of short circuit (contact between an anode catalytic layer and a cathode catalytic layer), and little occurring of carbon corrosion. In view of this point, the combinations of (1) and (3) are preferable. In addition, the combination (2) can preferably be used in view of providing easy production, although suppression effects of carbon corrosion is a little inferior.

Further, in the present invention, by formation of the first gasket layer at the end part of a cathode catalytic layer, and by forming the second gasket layer at the end part of an anode catalytic layer, the positions of the effective anode catalytic layer and the effective cathode catalytic layer can easily and correctly be controlled. Because correct adjustment of positions of each catalytic layer in advance is not necessary so that the end part of each catalytic layer terminates at the same position in the thickness direction of an electrolyte membrane-electrode assembly, this is significantly desirable in consideration of industrial mass production. Specifically, the end parts of a cathode catalytic layer and an anode catalytic layer may terminate nearly at the same position in the thickness direction of an electrolyte membrane-electrode assembly, however, the positions of the endparts of a cathode catalytic layer and an anode catalytic layer may be displaced. This is because, even in such a case, a gasket layer may be formed, as appropriate, at the end part of a catalytic layer, so as to make each catalytic layer in desired size and relative position. In this case, the end part of an anode catalytic layer preferably terminates over the end part of a cathode catalytic layer, in the thickness direction of an electrolyte membrane-electrode assembly. As described above, in the present invention, because it is essential that area of an effective anode catalytic layer is larger than area of an effective cathode catalytic layer, amount of a catalyst or an electrolyte used can be decreased to a low level, and overlapping with a gasket layer can be reduced, by making a cathode catalytic layer smaller than the size of an anode catalytic layer in advance like this, and thus they are economically preferable.

In the electrolyte membrane-electrode assembly of the present invention, the end part of a catalytic layer and a gasket layer, in particular, the end part of a catalytic layer and the end part of a gas impermeable layer described below, may not completely coincide together, and a certain gap may be present. Because even in such a case, function as a gasket layer can similarly be obtained and effects by the present invention can sufficiently be fulfilled, if the gap is filled with a gas impermeable adhesive layer. Specifically, in a preferable embodiment of the electrolyte membrane-electrode assembly of the present invention, the inner end part of the First or the second gas impermeable layer is provided outside from the end part of a catalytic layer in the thickness direction of an electrolyte membrane-electrode assembly, and an adhesive layer is provided between the inner end part of a gas impermeable layer and the end part of a catalytic layer.

In the present invention, the second gasket layer is formed at the end part of an anode catalytic layer. By such forming, the following advantages can be attained: sizes of an anode catalytic layer and a cathode catalytic layer can easily be controlled; position of each catalytic layer is easily adjusted; a cathode catalytic layer region opposing to the region wherein air is present at the downstream of an anode catalytic layer in start up, and a cathode catalytic layer region opposing to a region wherein an anode catalytic layer is not present and hydrogen is not oxidized in continuous operation can be reduced, because the end part of a catalytic layer is sealed with a gasket layer, a part with large difference between cathode potential and electrolyte potential can be reduced, and thus carbon corrosion of a cathode catalytic layer can effectively be prevented and suppressed; and deterioration of an electrolyte membrane can effectively be prevented and suppressed, because by sealing a peripheral part wherein a cathode catalytic layer is not present and only an anode catalytic layer is present, with a gasket layer, to suppress cross-leak of oxygen from a cathode which remarkably induces the leak at the end part of a cathode catalytic layer, to an anode, generation of hydrogen peroxide at an anode in this region can significantly be suppressed. In this case, the end part of a catalytic layer overlaps with the end part of a gasket layer. For a cathode catalytic layer, length [A (mm) in Fig. 7] of the overlapped part of the end part of a cathode catalytic layer 3' with the first gasket layer 5 is over 0 (A>0) and in the range of 0.2 to 2.0 mm, and more preferably, 0.5 to 1.5 mm. Further, for an anode catalytic layer 4', length [B (mm) in Fig. 7] of the overlapped part of the end part of an anode catalytic layer 4' with the second gasket layer 6 is over 0 and not longer than 2 mm (0<B≤2) and in the range of 0.2 to 2.0 mm, and more preferably, 0.5 to 1.5 mm. Furthermore, length [C (mm) in Fig. 7] between the outer end part of a cathode catalytic layer 3' and the outer end part of an anode catalytic layer 4' terminating over the outer end part of a cathode catalytic layer, in the thickness direction of an electrolyte membrane-electrode assembly 1, is larger than B above (B<C) and in the range of 2.1 to 4.0 mm, and more preferably, 2.5 to 3.5 mm. When the length A and length B are within these ranges, sufficient sealing performance at the end part of a catalytic layer can be secured.

In the electrolyte membrane-electrode assembly 1 of the present invention, length [X (mm) in Fig. 7] between the outer end part of a cathode catalytic layer 3' and the inner end part of the second gasket layer 6, in the thickness direction of an electrolyte membrane-electrode assembly 1, is preferably over 0 (X>0). More preferably, the length X is in the range of 0.1 to 3.8 mm, and most preferably, 1.0 to 3.0 mm. When the length X is within the range, deterioration over time of an electrolyte membrane, caused by hot press in assembly of each layer of an MEA, or fastening pressure on cell assembly (compression pressure exerted in sandwiching an MEA with separators), as described later in detail, can effectively be suppressed and prevented, and also short circuit phenomenon by contact between a cathode catalytic layer and an anode catalytic layer can effectively be suppressed and prevented.

Further, in the electrolyte membrane-electrode assembly of the present invention, the first gasket layer and/or the second gasket layer, the overlapped part with the end parts of a cathode/an anode catalytic layers, or the contact part with the end parts of a cathode/an anode catalytic layers preferably has at least ability to suppress gas permeability. By imparting ability to suppress and inhibit gas permeation to a gasket layer, gas sealing performance at the overlapped part between the end part of a gasket layer and the end part of a catalytic layer (in particular, sealing performance against oxygen gas in a cathode) can be improved. A method for imparting ability to suppress and inhibit gas permeation to a gasket layer is not especially limited. For example, the following methods for forming a gasket layer with a gas impermeable layer and an adhesive layer can preferably be used, as described later in detail: (1) a method which comprises selectively providing a sheet having specific thickness at an overlapped part between the end part of a catalytic layer and a gasket layer, subjecting it to thermocompression to join a catalytic layer and an electrolyte membrane by hot press, thereby sufficiently penetrating adhesive of an adhesive layer into a overlapped part by pressure of thermocompression exerted thereon; (2) a method which comprises controlling penetrating amount of adhesive of an adhesive layer into an overlapped part by suitable setting the thickness of an adhesive layer or the amount of adhesive contained in an adhesive layer in the overlapped part; (3) a method which comprises impregnating a resin in advance to a gasket layer (a gas impermeable layer and/or an adhesive layer) corresponding to the overlapped part; and (4) a method which comprises tightly forming a catalytic layer corresponding to the overlapped part in advance. However, a method for imparting ability to suppress and inhibit gas permeation to a gasket layer is not limited to these methods, and other well-known methods may be applied.

The electrolyte membrane-electrode assembly of the present invention can be produced similarly using a well-known method or a modified method, as appropriate. Specifically, a method for sequentially forming a cathode catalytic layer, an anode catalytic layer a first gasket layer, and optionally a second gasket layer, on a polymer electrolyte membrane, in suitable arrangement, for example, in the above arrangement can be used.

Therefore, according to a second aspect of the present invention, a method for producing an electrolyte membrane-electrode assembly is to be provided, which comprises a step of forming a first gasket layer at the surface of a cathode catalytic layer side of a polymer electrolyte membrane, and then forming a cathode catalytic layer, so that the end part of the cathode catalytic layer overlaps with the end part of the gasket layer; and a step of forming a second gasket layer at the surface of an anode catalytic layer side of the polymer electrolyte membrane, and then forming an anode catalytic layer, so that the end part of the anode catalytic layer overlaps with the end part of the gasket layer, wherein the first gasket layer and the second gasket layer are formed so that area of the effective anode catalytic layer is made larger than area of the effective cathode catalytic layer the method further comprising the step of forming a second gasket layer at the surface of an anode catalytic layer side of the polymer electrolyte membrane, and then forming an anode catalytic layer, so that the end part of the anode catalytic layer overlaps with the end part of the gasket layer: wherein the first gasket layer and the second gasket layer are formed so that area of the effective anode catalytic layer is made larger than area of the effective cathode catalytic layer, and wherein the second gasket layer is formed such that the length A of the overlapped part between the end part of the cathode catalytic layer and the first gasket layer is 0.2 mm≤A≤2.0 mm, the length B of the overlapping part between the end part of the anode catalytic layer and the second gasket layer is 0.2 mm≤B≤2.0 mm, and the length C between the outer end part of the cathode catalytic layer and the outer end part of the anode catalytic layer in the thickness direction of an electrolyte membrane-electrode assembly, is 2.1 mm≤C≤4.0 mm.

According to a third aspect of the present invention, a method for producing an electrolyte membrane-electrode assembly is to be provided, which comprises a step of forming a cathode catalytic layer at the surface of a cathode catalytic layer side of a polymer electrolyte membrane, and then forming a first gasket layer, so as to cover the end part of the cathode catalytic layer; and a step of forming an anode catalytic layer at the surface of an anode catalytic layer side of the polymer electrolyte membrane, and then forming a second gasket layer, so as to cover the end part of the anode catalytic layer, wherein the first gasket layer and the second gasket layer are formed so that area of the effective anode catalytic layer is made larger than area of the effective cathode catalytic layer the method further comprising the step of forming a second gasket layer at the surface of an anode catalytic layer side of the polymer electrolyte membrane, and then forming an anode catalytic layer, so that the end part of the anode catalytic layer overlaps with the end part of the gasket layer: wherein the first gasket layer and the second gasket layer are formed so that area of the effective anode catalytic layer is made larger than area of the effective cathode catalytic layer, and wherein the second gasket layer is formed such that the length A of the overlapped part between the end part of the cathode catalytic layer and the first gasket layer is 0.2 mm≤A≤2.0 mm, the length B of the overlapping part between the end part of the anode catalytic layer and the second gasket layer is 0.2 mm≤B≤2.0 mm, and the length C between the outer end part of the cathode catalytic layer and the outer end part of the anode catalytic layer in the thickness direction of an electrolyte membrane-electrode assembly, is 2.1 mm≤C≤4.0 mm.

According to a fourth aspect of the present invention, a method for producing an electrolyte membrane-electrode assembly is to be provided, which comprises a step of forming a first gasket layer at the surface of a cathode catalytic layer side of a polymer electrolyte membrane, and then forming a cathode catalytic layer, so that the end part of the cathode catalytic layer overlaps with the end part of the gasket layer; and a step of forming an anode catalytic layer at the surface of an anode catalytic layer side of the polymer electrolyte membrane, and then forming a second gasket layer, so as to cover the end part of the anode catalytic layer, wherein the first gasket layer and the second gasket layer are formed so that area of the effective anode catalytic layer is made larger than area of the effective cathode catalytic layer the method further comprising the step of forming a second gasket layer at the surface of an anode catalytic layer side of the polymer electrolyte membrane, and then forming an anode catalytic layer, so that the end part of the anode catalytic layer overlaps with the end part of the gasket layer; wherein the first gasket layer and the second gasket layer are formed so that area of the effective anode catalytic layer is made larger than area of the effective cathode catalytic layer, and wherein the second gasket layer is formed such that the length A of the overlapped part between the end part of the cathode catalytic layer and the first gasket layer is 0.2 mm≤A≤2.0 mm, the length B of the overlapping part between the end part of the anode catalytic layer and the second gasket layer is 0.2 mm≤B≤2.0 mm, and the length C between the outer end part of the cathode catalytic layer and the outer end part of the anode catalytic layer in the thickness direction of an electrolyte membrane-electrode assembly, is 2.1 mm≤C≤4.0 mm.

According to the method of the present invention, the cathode catalytic layer, the first gasket layer, the anode catalytic layer, and optionally the second gasket layer, can correctly and easily be provided in desired order. In addition, by providing the first gasket layer and the second gasket layer at the end part of a cathode catalytic layer and the end part an anode catalytic layer, respectively, an effective cathode catalytic layer and an effective anode catalytic layer can be accurately specified to have desired area.

In the method of the present invention, position adjustment of each catalytic layer may not necessarily be correct, since the first gasket layer is formed at the end part of a cathode catalytic layer, and preferably the second gasket layer at the end part of an anode catalytic layer. Namely, the end part of the cathode catalytic layer and the end part of the anode catalytic layer may terminate at nearly the same position, in the thickness direction of the electrolyte membrane-electrode assembly. Alternatively, the end part of the cathode catalytic layer and the end part of the anode catalytic layer may also terminate at different positions, in the thickness direction of the electrolyte membrane-electrode assembly. Even in such a case, a gasket layer may be formed suitably at the end part of a catalytic layer, so that each catalytic layer has desired size and position. In this case, the end part of an anode catalytic layer preferably terminates over the end part of a cathode catalytic layer, in the thickness direction of an electrolyte membrane-electrode assembly. As described above, in the present invention, because it is essential that area of an effective anode catalytic layer is made larger than area of an effective cathode catalytic layer, use amount of a catalyst or an electrolyte can be suppressed to a low level, and overlapping with a gasket layer part can be reduced, by making a cathode catalytic layer smaller than the size of an anode catalytic layer in advance like this, which is economically preferable.

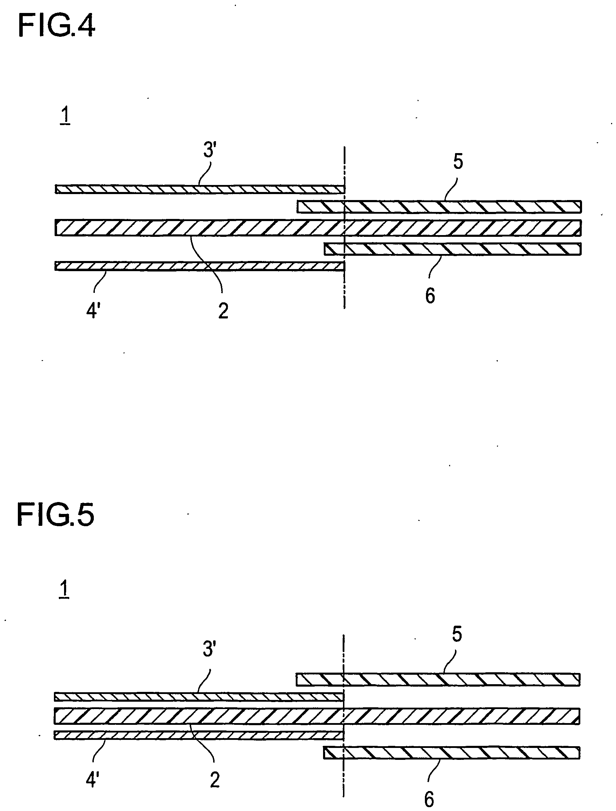

For example, in the method according to the second aspect of the present invention, when the end part of a cathode catalytic layer 3' and the end part of an anode catalytic layer 4' are made to terminate at nearly the same position in the thickness direction of an electrolyte membrane-electrode assembly 1, the end parts of a cathode catalytic layer 3' and an anode catalytic layer 4' are provided in a state as shown in Fig. 4. In such a case, because gasket layers 5, 6 are present between a cathode catalytic layer 3' and an anode catalytic layer 4', there is further advantage that short circuit of the edge parts caused by contact between the end parts of the catalytic layers themselves, in being pressed with a gas diffusion layer and the like, or in lamination as a fuel cell stack, can be prevented. In addition, in the method according to the third aspect of the present invention, when the end part of a cathode catalytic layer 3' and the end part of an anode catalytic layer 4' are made to terminate at nearly the same position in the thickness direction of an electrolyte membrane-electrode assembly 1, the end parts of a cathode catalytic layer 3' and an anode catalytic layer 4' are provided in a state as shown in Fig. 5. In such a case, because gasket layers 5, 6 are provided after forming catalytic layers 3' and 4', there are advantages that a production process is simple and convenient, and in addition, the region of an effective catalytic layer region can be controlled accurately and easily, and further the peripheral part of a catalytic layer can firmly be sealed (in low gas permeation rate) with a gasket layer, as compared with MEM of Fig. 4. Furthermore, in the method according to the fourth aspect of the present invention, when the end part of a cathode catalytic layer 3' and the end part of an anode catalytic layer 4' are made to terminate at nearly the same position in the thickness direction of an electrolyte membrane-electrode assembly 1, the end parts of a cathode catalytic layer 3' and an anode catalytic layer 4' are provided in a state as shown in Fig. 6. The structure above is one obtained by combination of the structure of the methods according to the second and third aspects of the present invention. Because a gasket layer 5 is present between a cathode catalytic layer 3' and an anode catalytic layer 4', short circuit of the edge parts, in being pressed with a gas diffusion layer (not shown) and the like, can be prevented, and furthermore, because the end part of an anode catalytic layer is sealed with a gasket layer, and area of an effective catalytic layer at an anode catalytic layer can easily be controlled, area of an effective anode catalytic layer canmore surelybe set larger than area of an effective cathode catalytic layer. In this case, a reversed pattern of Fig. 6 is also possible, namely, a method for forming the first gasket layer 5 so as to cover the end part of a cathode catalytic layer 3', and forming the second gasket layer 6 between an anode catalytic layer 4' and a polymer electrolyte membrane 2, so as to be covered with the end part of an anode catalytic layer 4'. However, by such a method, a part of a cathode catalytic layer 3' opposing to an overlapped part between the second gasket layer 6 and an anode catalytic layer 4', and contacting with an electrolyte membrane is made to be present. Consequently, difference between cathode potential and electrolyte potential becomes large, which induces a carbon corrosion reaction and promotes corrosion of carbon black, a conductive carrier in a cathode catalytic layer, and may lower catalytic activity, and thus such a method is not preferable.

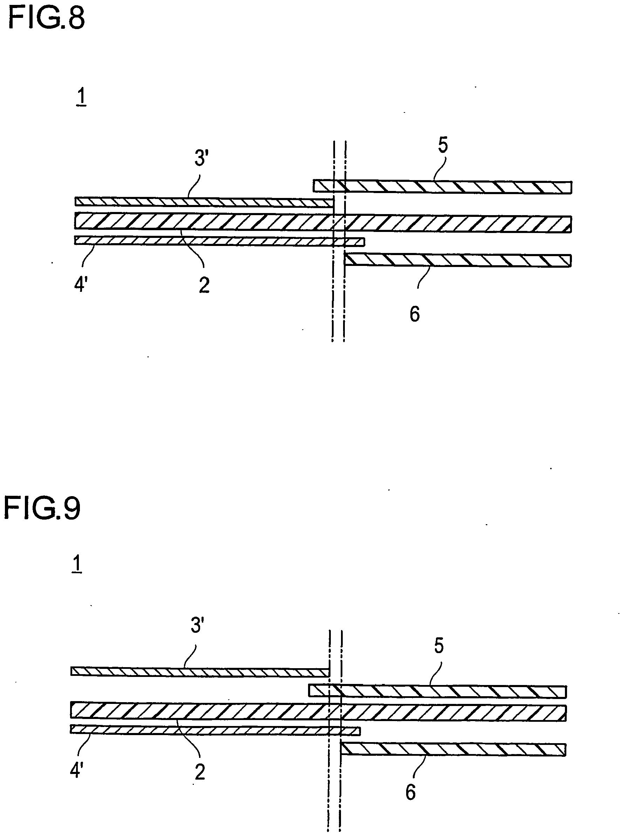

In addition, in the method according to the second aspect of the present invention, when positions of the end part of a cathode catalytic layer 3' and the end part of an anode catalytic layer 4' are displaced in the thickness direction of an electrolyte membrane-electrode assembly 1, the end parts of a cathode catalytic layer 3' and an anode catalytic layer 4' are provided in a state as shown in Fig. 7. In such a case, there is advantages that, because area of each effective catalytic layer can freely be set depending of location of a gasket layer, even when correct position adjustment of the end part of each catalytic layer is not secured, production process becomes simpler and more convenient, and also because gasket layers are present between a cathode catalytic layer 3' and an anode catalytic layer 4', short circuit of the edge parts, in being pressed with a gas diffusion layer afterward, or in lamination as a fuel cell stack, can be prevented. In the method according to the third aspect of the present invention, when positions of the end part of a cathode catalytic layer 3' and the end part of an anode catalytic layer 4' are displaced in the thickness direction of an electrolyte membrane-electrode assembly 1, the end parts of a cathode catalytic layer 3' and an anode catalytic layer 4' are provided in a state as shown in Fig. 8. In such a method, because gasket layers 5, 6 are provided after forming a catalytic layer, there is advantage, in addition to the advantage of simple and convenient production process similarly as described in the method according to the second aspect, that a production process is more simple and convenient compared with a method of Fig. 4, and control of a region of an effective catalytic layer can be carried out accurately and easily, and further a catalytic layer can firmly be sealed (in low gas permeation rate) with a gasket layer. In the method according to the fourth aspect of the present invention, when the end part of a cathode catalytic layer 3' and the end part of an anode catalytic layer 4' are displaced in the thickness direction of an electrolyte membrane-electrode assembly 1, the end parts of a cathode catalytic layer 3' and an anode catalytic layer 4' are provided in a state as shown in Fig. 9. Such structure as described above, because a gasket layer 5 is present between a cathode catalytic layer 3' and an anode catalytic layer 4', can prevent short circuit of the edge parts, in being pressed with a gas diffusion layer afterward, or in lamination as a fuel cell stack, in addition to the advantage of simple and convenient production process similarly as described in the method according to the second aspect, and also, because an anode catalytic layer 4' side is sealed with a gasket layer 6, and area of effective catalytic layer at an anode catalytic layer 4' side can easily be controlled, area of an effective anode catalytic layer can more surely be set larger than area of an effective cathode catalytic layer.

In the method of the present invention, in particular, in the methods according to the second to fourth aspect of the present invention, wherein positions of the end part of a cathode catalytic layer 3' and the end part of an anode catalytic layer 4' are displaced, in the thickness direction of an electrolyte membrane-electrode assembly 1, gap between the end part of a cathode catalytic layer 3' and the end part of an effective anode catalytic layer is preferably not present as far as possible (for example, "X" in Fig. 7 is near to 0). This is because, if such a gap part is present, even if an electron (e⁻) and a proton (H⁺) generated at this part are transferred to a cathode catalytic layer, due to larger area of an effective anode catalytic layer than area of an effective cathode catalytic layer, this proton and electron cannot efficiently react with oxygen at a cathode and catalytic action does not work effectively. In consideration of these things, width (X) of a gap part between the end part of a cathode catalytic layer and the end part of an effective anode catalytic layer is preferably not larger than 1 cm, and more preferably not larger than 3 mm.

In the present invention, a catalyst component used in a cathode catalytic layer is not especially limited, so long as it has catalytic action in a reduction reaction of oxygen, and well-known catalysts can similarly be used. In addition, a catalyst component used in an anode catalytic layer is also not especially limited, so long as it has catalytic action in an oxidation reaction of hydrogen, and well-known catalysts can similarly be used. Specifically, it can be selected among metals such as platinum, ruthenium, iridium, rhodium, palladium, osmium, tungsten, lead, iron, chromium, cobalt, nickel, manganese, vanadium, molybdenum, gallium and aluminum, and alloys thereof, and the like. Among these, one containing at least platinum can preferably be used, to improve catalytic activity, poisoning resistance to CO and the like, heat resistance and the like. Composition of the alloys is preferably platinum of 30 to 90% by atom and metals to be alloyed of 10 to 70% by atom, although it depends on kind of metals to be alloyed. Composition of alloys when alloys are used as a cathode catalyst can preferably platinum of 30 to 90% by atom and other metals to be alloyed of 10 to 70% by atom, although it depends on kind of metals to be alloyed, and can be selected, as appropriate, by those skilled in the art. As used herein, "alloy" generally means one composed of a metal element added with one or more kinds of metal elements or non-metal elements, and a general name of one having metallic property. Alloy morphology includes eutectic alloy, so to speak a mixture, wherein component elements are present as independent crystals, solid solution wherein component elements are completely dissolved each other, one wherein component elements form an intermetallic compound or a compound between a metal and a non-metal, and the like, and any one of these may be included in the present application. In this case, a catalyst component used in a cathode catalytic layer and a catalyst component used in an anode catalytic layer can be selected among the above ones, as appropriate. In the explanation below, unless otherwise specified, a catalyst component for a cathode catalytic layer and a catalyst component for an anode catalytic layer have similar definition for both, and referred to as "a catalyst component" collectively. However, a catalyst component for a cathode catalytic layer and an anode catalytic layer may not be the same and can be selected, as appropriate, so as to fulfill desired action as described above.

Shape or size of a catalyst component is not especially limited, and similar shape and size as in a well-known catalyst component can be used. A catalyst component is preferably granular. In this case, smaller average particle diameter of catalyst particles used in catalyst ink is preferable due to providing increased effective electrode surface for proceeding an electrochemical reaction and thus higher oxygen reduction activity. On the contrarily, practically, too small average particle diameter provides phenomenon to lower oxygen reduction activity. Therefore, average particle diameter of catalyst particles contained in catalyst ink is preferably in the range of 1 to 30 nm, more preferably 1.5 to 20 nm, further more preferably 2 to 10 nm, and particularly preferably 2 to 5 nm in granular form. In view of easiness of carrying, it is preferably not smaller than 1 nm, while in view of catalyst utilization rate, it is preferably not larger than 30 nm. As used herein, "average particle diameter of catalyst particles" can be measured from crystal diameter determined by half width of a diffraction peak of a catalyst component, in X-ray diffraction, or average value of particle diameters of a catalyst component studied by transmission electron microscope.

In the present invention, the catalyst particles are contained in catalyst ink as an electrode catalyst carried on a conductive carrier.

As the conductive carrier, any one can be used so long as it has specific surface area for carrying catalyst particles in desired dispersed state and sufficient electron conductivity as a current collector. A conductive carrier having carbon as a main component is preferable. Specifically, carbon particles comprising carbon black, activated carbon, coke, natural graphite, artificial graphite, and the like may be included. As used herein, "a main component is carbon" means "to have a carbon atom as a main component", and it is such concept as contains both "only composed of a carbon atom" and "substantially composed of a carbon atom". Optionally, an element(s) other than a carbon atom may be contained to improve characteristics of a fuel cell. As used herein, "substantially composed of a carbon atom" means to allow incorporation of impurity in an amount of not higher than about 2 to 3% by weight.

Specific BET surface area of the conductive carrier may be any value sufficient to carry a catalyst component in highly dispersed state. It is preferably in the range of 20 to 1600 m²/g, and more preferably 80 to 1200 m²/g. The specific BET surface area below 20 m²/g would provide low dispersibility of a catalyst component and a polyelectrolyte to the conductive carrier and sufficient performance of power generation may not be obtained, while the value over 1600 m²/g may lower effective utilization rate of a catalyst component and a polyelectrolyte.

In addition, size of the conductive carrier is not especially limited. In view of easiness of carrying, utilization rate of a catalyst, and control of thickness of an electrode catalytic layer within a suitable range, an average particle diameter of about 5 to 200 nm, preferably about 10 to 100 nm is suitable.

In an electrode catalyst having a catalyst component carried onto the conductive carrier, amount of a catalyst component carried is preferably in the range of 10 to 80% by weight, more preferably 30 to 70% by weight based on total amount of an electrode catalyst. The carrying amount over 80% by weight would lower dispersibility of a catalyst component on the conductive carrier, and improvement of power generation performance is small comparative to the increase in the carrying amount, and thus may lower economical advantage. On the other hand, the carrying amount below 10% by weight would lower catalytic activity per unit mass, requiring high quantity of electrode catalyst to obtain desired power generation performance, and thus not preferable. In this case, the carrying amount of a catalyst component can be studied by means of inductively-coupled plasma emission spectrometry (ICP).

In a cathode catalytic layer/an anode catalytic layer (hereinafter referred to simply as "a catalytic layer") of the present invention, a polyelectrolyte is contained in addition to the electrode catalyst. The polyelectrolyte is not especially limited, and well-known one can be used, and material having at least high proton conductivity can be used. A polyelectrolyte which can be used in this invention is largely classified into fluorine-based electrolyte containing a fluorine atom in whole of or a part of polymer skeleton, and a hydrocarbon-based electrolyte not containing a fluorine atom in polymer skeleton.

As the fluorine-based electrolyte, perfluorocarbon sulfonic acid-based polymers such as Nafion (registered trade mark; produced from DuPont Co., Ltd.), Aciplex (registered trade mark; produced from Asahi Kasei Corp.) and Flemion (registered trade mark; produced from Asahi Glass Co., Ltd.), polytrifluorostyrene sulfonic acid-based polymers, perfluorocarbon phosphonic acid-based polymers, trifluorostyrene sulfonic acid-based polymers, ethylentetrafluoroethylene-g-styrene sulfonic acid-based polymers, ethylene-tetrafluoroethylene copolymers, polyvinylidene fluoride-perfluorocarbon sulfonic acid-based polymers, and the like may be advantageously included.

As the hydrocarbon-based electrolyte, polysulfone sulfonic acid, polyarylether ketone sulfonic acid, polybenzimidazol alkylsulfonic acid, polybenzimidazol alkylphosphonic acid, polystyrene sulfonic acid, polyether ether ketone sulfonic acid, polyphenyl sulfonic acid, and the like may be advantageously included.

As a polyelectrolyte, ones containing a fluorine atom may be preferably used and, among them, fluorine-based electrolyte such as Nafion (registered trade mark; produced from DuPont Co., Ltd.), Aciplex (registered trade mark; produced from Asahi Kasei Corp.) and Flemion (registered trade mark; produced from Asahi Glass Co., Ltd.) may be more preferably used.

In addition, carrying of a catalyst component on a conductive carrier can be executed by a well-known method. For example, well-known methods such as an impregnation method, a liquid-phase reduction carrying method, an evaporation to dryness method, a colloid adsorption method, a spray pyrolysis method, and a reversed micelle method (a micro emulsion method) can be used, or commercial products may be used as an electrolyte catalyst.

In the method of the present invention, a catalytic layer is formed by applying a catalyst ink composed of an electrode catalyst, a polyelectrolyte and a solvent, as described above, onto the surface of a polymer electrolyte membrane (or onto the surface of a polymer electrolyte membrane in partially covered state with a gasket layer) . In this case, a solvent is not especially limited, and a usual solvent which has been conventionally used for forming a catalytic layer can similarly be used. Specifically, water, and lower alcohols such as ethanol and 2-propanol can be used. In addition, use amount of a solvent is also not especially limited, and the similar amount well-known can be used, and in catalyst ink, an electrode catalyst may be used in any amount so long as it is such amount as sufficiently fulfills desired action, namely, catalytic action for an oxidation reaction of hydrogen (an anode side), and a reduction reaction of oxygen (a cathode side) . An electrode catalyst is preferably present in an amount in the range of 5 to 30% by weight, more preferably 9 to 20% by weight in a catalyst ink.

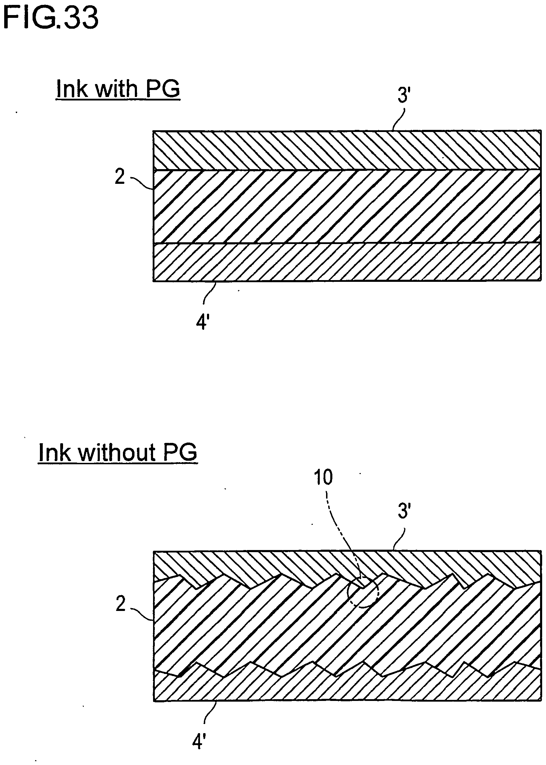

The catalyst ink used in the present invention may contain a thickener. Use of a thickener is effective in such a case when catalyst ink will not be applied well onto a transcription board, and the like. A thickener used therein is not especially limited and a well-known thickener can be used, for example, glycerin, ethylene glycol (EG), polyvinyl alcohol (PVA) and propylene glycol (PG) may be included. Among these, propylene glycol (PG) is preferably used. This is because, by use of propylene glycol (PG), boiling point of catalyst ink increases, to lower an evaporation rate of the solvent. Therefore, for example, solvent evaporation rate in catalyst ink applied can be decreased, and crack generation 10 in a catalytic layer 3' after the drying process can be suppressed and prevented, by the addition of PG in catalyst ink during formation of a catalytic layer on an electrolyte membrane 1 by a transcription method, and first when catalyst ink is applied using a screen printer onto a transcription board other than a membrane, and dried (see Fig. 33) . By transcribing a catalytic layer with little crack onto a membrane by using such a catalyst ink, concentration of mechanical stress to a membrane in an OCV duration test can be reduced, which can result in improvement of durability of an MEA. In the case of using a thickener, the addition amount thereof is not especially limited, so long as it is about such amount not to interrupt the effects of the present invention. It is preferably in the range of 5 to 65% by weight, based on total weight of catalyst ink. In particular, when PG is used as a thickener, the addition amount thereof is preferably 10 to 30% by weight, based on total weight of catalyst ink.

A method for preparing catalyst ink according to the present invention is not especially limited, so long as it provides suitable mixing with an electrode catalyst, an electrolyte and a solvent, and optionally a water repellent polymer and/or a thickener. For example, catalyst ink can be prepared by adding an electrolyte in a polar solvent, heating and stirring the resultant mixture, to dissolve an electrolyte in a polar solvent, and then adding an electrode catalyst thereto. Alternatively, catalyst ink may be prepared by once dispersing or suspending an electrolyte in a solvent, and then mixing the dispersion or suspension with an electrolyte. In addition, a commercial available electrolyte solution having an electrolyte prepared into another solvent in advance (for example, a Nafion solution produced from DuPont Co., Ltd.: a 1-propanol solution having Nafion dispersed or suspended in a concentration of 5% by weight) may be used.

Each catalytic layer may be formed by applying the catalyst ink on a polymer electrolyte membrane, or on a polymer electrolyte membrane while covering a part of a gasket layer. In this case, formation conditions of a cathode catalytic layer and an anode catalytic layer on a polymer electrolyte membrane are not especially limited, and a well-known method can be used similarly, or after modification, as appropriate. For example, catalyst ink is applied on a polymer electrolyte membrane so as give a thickness after drying of 5 to 20 µm, and dried the coat in a vacuum dryer or under reduced pressure at 25 to 150°C, preferably at 60 to 120°C, for 5 to 30 minutes, more preferably for 10 to 20 minutes. When thickness of a catalytic layer is not sufficient in one process, the similar application and drying processes may be repeated until desired thickness is obtained.

Further, in the present invention, a gasket layer may be any one so long as it is impermeable to gas, in particular oxygen or hydrogen gas. In general, it is composed of an adhesive layer for adhering a polymer electrolyte membrane with the end parts of a cathode catalytic layer and an anode catalytic layer, and an impermeable layer formed of gas impermeable material.

A material forming an impermeable layer is not especially limited, so long as it is impermeable against oxygen or hydrogen gas after a membrane is obtained. Specifically, polyethylene naphthalate (PEN), polyethylene terephthalate (PET), polytetrafluoroethylene (PTFE), polyvinylidene fluoride (PVDF), and the like are included.

A material which can be used as an adhesive layer is also not especially limited, so long as it enables to firmly adhere a polymer electrolyte membrane or a cathode catalytic layer and an anode catalytic layer with a gasket layer. The adhesive layer has also preferably low gas impermeability. When such an adhesive layer is adopted, the adhesive layer also enables to serve as a gas impermeable layer in an MEA produced, which is preferable. Specifically, hot-melt type adhesive such as polyolefin, polypropylene and a thermoplastic elastomer, acrylic adhesive, polyester, and olefin type adhesive such aspolyolefincanbeused. Among these, as material forming an adhesive layer, hot-melt type adhesive is preferably used. Because hot-melt type adhesive does not soften at normal temperature, it has such advantage that position adjustment becomes simple and convenient in a step of providing a gasket layer. In addition to this advantage, it also has advantage that the production can be easily carried out for a short time, as compared with thermosetting-type adhesive. Furthermore, depending on kind of an adhesive layer to adhere a gasket layer at the end part of a catalytic layer, gap may be generated between a catalytic layer and a gasket layer, during sealing a gasket layer. For example, when such gap is generated at a cathode, cross-leak of oxygen gas occurs from this gap, which induces oxidative deterioration of an electrolyte membrane caused by formation of hydrogen peroxide, and meaning of mounting a gasket layer may be reduced. On the other hand, when hot-melt type adhesive is adopted as adhesive, the end part of a catalytic layer can be sealed by the adhesive layer softened by hot press treatment in sealing. Therefore, risk of generating gap in sealing process of the end part of a catalytic layer with a gasket layer can be reduced, and an MEA with high reliability can be produced. In this case, softening point of hot-melt type adhesive is not especially limited, and can be selected, as appropriate, in consideration of material used in an impermeable layer or a catalytic layer. Preferably, hot-melt type adhesive has softening point higher than operation temperature and within about the temperature range not damaging an electrolyte membrane or a catalytic layer in production. When such condition is satisfied, adhesive does not soften, even by operation of a fuel cell having the MEA incorporated practically thereinto, and firm sealing performance (low gas permeation rate) between the end part of a catalytic layer and a gasket layer can be maintained, and an MEA can be produced without damage (without lowering of performance or fracture) of an electrolyte membrane or a catalytic layer, even if heated in producing an MEA, by assembling a membrane and an electrolyte membrane, and the like, as described later. Specifically, melting point of hot-melt type adhesive is 50 to 170°C and most preferably 90 to 150°C.

A formation method for a gasket layer is not especially limited, and a well-known method can be used. For example, such a method can be used for applying the adhesive on a polymer electrolyte membrane, or on a polymer electrolyte membrane while covering the end part of a catalytic layer, so as to give thickness of 5 to 30 µm, and then applying the gas impermeable material, so as to give thickness of 10 to 200 µm, and curing by heating at 50 to 170°C for 10 seconds to 10 minutes. Alternatively, adhesive may be applied onto the impermeable layer after forming gas impermeable material in sheet form in advance, to form a gasket layer. Then, it may be adhered onto a polymer electrolyte membrane, or onto a polymer electrolyte membrane while covering a part of a gasket layer. In this case, thickness of the impermeable layer is not especially limited. It is preferably in the range of 15 to 40 µm. Similarly, thickness of the adhesive layer is also not especially limited. It is preferably in the range of 10 to 25 µm.

An electrolyte membrane used in the MEA of the present invention is not especially limited, and a membrane composed of a similar polyelectrolyte as used in an electrode catalytic layer may be included. In addition, a solid polymer type electrolyte membrane which is commercially available, such as a fluorine-based polyelectrolyte, including a perfluorosulfonic acid membrane represented by such as various Nafion grades (registered trade mark of DuPont Co., Ltd.) and Flemion produced from DuPont Co., Ltd.; an ion-exchange resin produced from Dow Chemical Co.,Ltd.,an ethylene-tetrafluoroethylene copolymer-type membrane, a resin membrane based on a trifluorostyrene polymer; and a hydrocarbon-based resin membrane having a sulfo group, a membrane obtained by micro porous membrane impregnated with a liquid electrolyte, and a membrane obtained by a porous substance membrane filled with a polyelectrolyte, and the like may be used. Although an polyelectrolyte used in the polymer electrolyte membrane and a polyelectrolyte used in each electrode catalytic layer may be the same or different, the same one is preferably used in view of improvement of adhesion between each electrode catalytic layer and a polymer electrolyte membrane.

Thickness of the polymer electrolyte membrane may be determined, as appropriate, in consideration of characteristics of an MEA to be obtained. It is preferably in the range of 5 to 300 µm, more preferably 10 to 200 µm, and particularly preferably 15 to 100 µm. In view of strength in membrane formation or durability in operation of an MEA, not lower than 5 µm is preferable, and in view of output characteristics in operation of an MEA, not higher than 300 µm is preferable.

In addition, as the polymer electrolyte membrane, one obtained by porous thin film formed from polytetrafluoroethylene (PTFE), polyvinylidene fluoride (PVDF) which is impregnated with an electrolyte component such as phosphoric acid or ionic liquid may be used, as well as fluorine-based polyelectrolyte or a hydrocarbon resin-based membrane having a sulfo group.

In the present invention, the first gasket layer and further preferably the second gasket layer preferably ones comprises a gas impermeable layer and an adhesive layer formed thereon, as described above. In such a case, as a method for producing an MEA which can particularly preferably be used is a method for producing an electrolyte membrane-electrode assembly which comprises a catalytic layers-forming step of forming a cathode catalytic layer and an anode catalytic layer at each surface of a polymer electrolyte membrane, so that area of the anode catalytic layer is made larger than area of the cathode catalytic layer; a gasket layer-locating step of locating a first gasket layer having a first adhesive layer formed on a first gas impermeable layer, on at least a part of the peripheral part of the polymer electrolyte membrane, so that the first adhesive layer and the polymer electrolyte membrane are in opposing position, and locating a second gasket layer having a second adhesive layer formed on a second gas impermeable layer, on at least a part of the end part or the peripheral part of the polymer electrolyte membrane, so that the second adhesive layer and the polymer electrolyte membrane are in opposing position; and an adhering step of adhering the first gasket layer and the second gasket layer with the polymer electrolyte membrane, by pressing a laminate obtained by the catalytic layers-forming step and the gasket layer-locating step.. This method forms a fifth aspect of the present invention.

The method according to the fifth aspect of the present invention will be explained below.

First, a cathode catalytic layer and an anode catalytic layer are formed at each surface of a polymer electrolyte membrane, so that area of an anode catalytic layer becomes larger than area of a cathode catalytic layer (catalytic layers-forming step). In this step, the explanation about a catalyst ink used in each catalytic layer (a catalyst component, a conductive carrier, a polyelectrolyte, and the like), an electrolyte membrane, and a method for forming a catalytic layer to an electrolyte membrane are omitted, because they are similar as in the second and the third aspects as above.

In the method for production of the present invention, then a gasket layer-locating step of locating a gasket layer is carried out.

Either of the catalytic layers-forming step for forming a catalytic layer, or the gasket layer-locating step of locating a gasket layer may be carried out first. In some cases, the catalytic layers-forming step and the gasket layer-locating step may be carried out simultaneously.

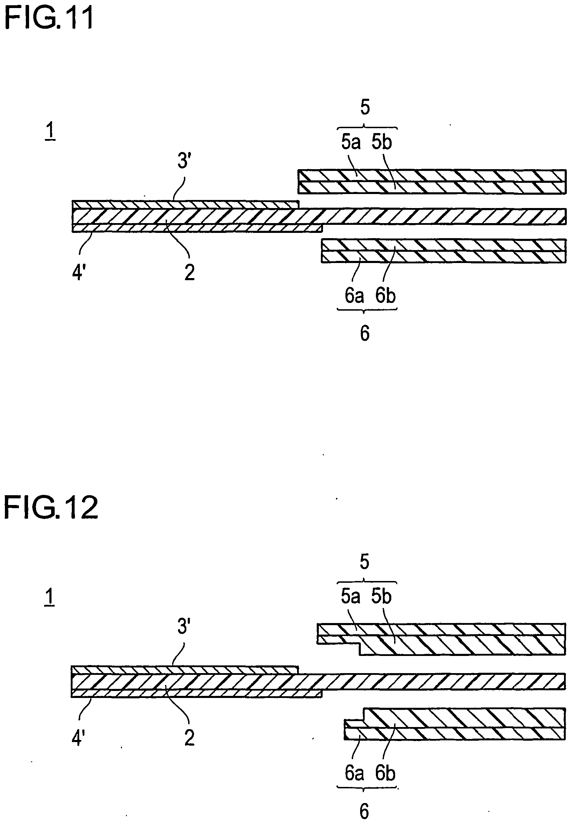

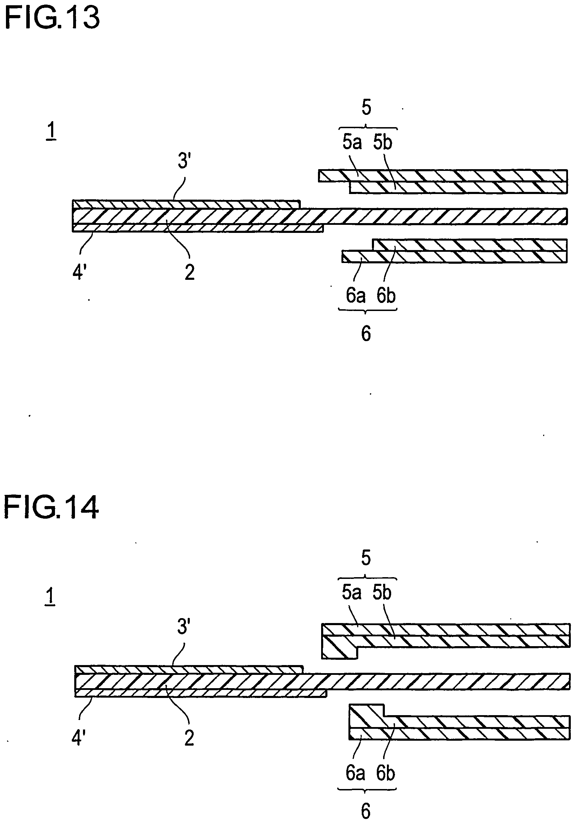

In the gasket layer-locating step according to the present invention, position of the first gasket layer on the peripheral part of a cathode catalytic layer, and position of the second gasket layer on the peripheral part of an anode catalytic layer may be suitably selected. Specifically, in the gasket layer-locating step, gasket layers 5, 6 can be provided, for example, so that the end part of the first gasket layer 5 and the end part of a cathode catalytic layer 3' terminate nearly at the same position, and the end part of the second gasket layer 6 and the end part of an anode catalytic layer 4' terminate nearly at the same position, as shown in Fig. 11. By such a location, sealing between a catalytic layer 3' (or 4') and a gasket layer 5 (or 6) can be carried out in highest precision, and gap occurring between them can be suppressed to the minimum. When a gasket layer is provided like this, so that the end part of a catalytic layer 3' (or 4') and the end part of a gasket layer 5 (or 6) terminate nearly at the same position, an adhesive layer 5b (or 6b) formed in a gasket layer 5 (or 6) preferably has at least partially a thin part wherein thickness of the part is thinner as compared with the other part, as shown in Fig. 12. By such a structure, protrusion of extra adhesive layer from a gasket layer can be suppressed and yield by an MEA production can be improved. In addition, when such suppression effects of protrusion of extra adhesive layer is desired to be fulfilled more significantly, at least either of the gasket layers can have an exposed part wherein no adhesive layer is present, as shown in Fig. 13.

On the other hand, location of a gasket layer may be carried out by making a certain degree of gap between a gasket layer and the end part of a catalytic layer. When a gasket layer is provided like this by making a certain degree of gap between the end part of a catalytic layer, for example, thickness of a part of (in particular, an inner end part (a catalytic layer side)) of an adhesive layer 5b (or 6b) formed in a gasket layer 5 (or 6) may preferably be increased, as compared with other part, as shown in Fig. 14. According to such an embodiment, even if a certain degree of gap is present between a gasket layer 5 (or 6) and the end part of a catalytic layer 3' (or 4'), in a gasket layer-locating step, an adhesive layer 5b (or 6b) having increased thickness is ensured to serve as an adhesive layer for filling this gap in an adhering step, and tight sealing between a gasket layer and the end part of a catalytic layer can further be secured. Such an embodiment is particularly effective, when hot-melt type adhesive is used as adhesive.

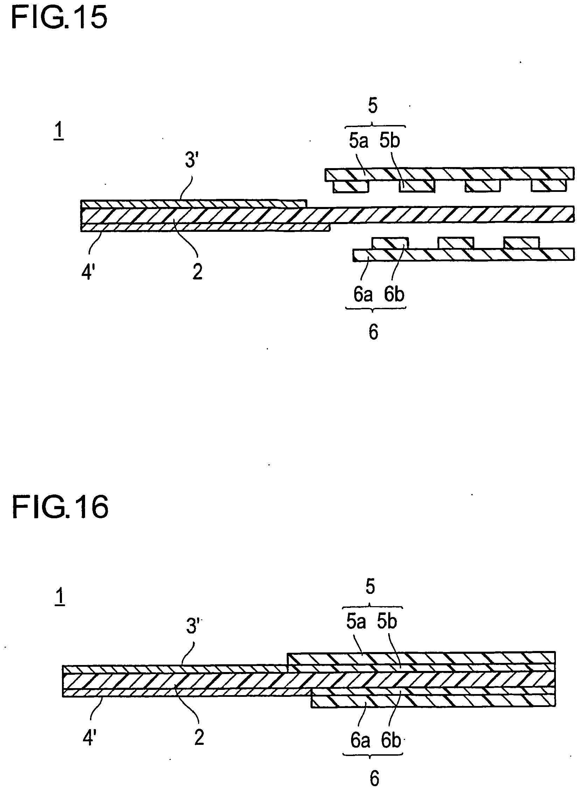

Alternatively, an adhesive layer may be formed in plural in convex state in the direction from the outer end part (outside of an MEA) toward the inner end part (a catalytic layer side) of a gasket layer, as shown in Fig. 15. Such plural hot-melt type adhesive layers 5b (or 6b) are integrated into one piece by melting in the adhering step. According to such an embodiment also, even if a certain degree of gap is present between a gasket layer 5 (or 6) and the end part of a catalytic layer 3' (or 4'), in a gasket layer-locating step, tight sealing between a gasket layer and the end part of a catalytic layer can further be attained.

As mentioned above, even if gap is present between the end part of a catalytic layer 3' (or 4') and a gasket layer 5 (or 6), in a gasket layer-locating step, this gap can be filled with adhesive (in particular, hot-melt type adhesive) by press treatment in an adhering step, as shown in Fig. 16. Therefore, since according to such a method for production, it is not necessary to provide a gasket layer 5 (or 6) with accurate coincidence with the end part of a catalytic layer 3' (or 4'), the production can be proceed simpler and more conveniently.

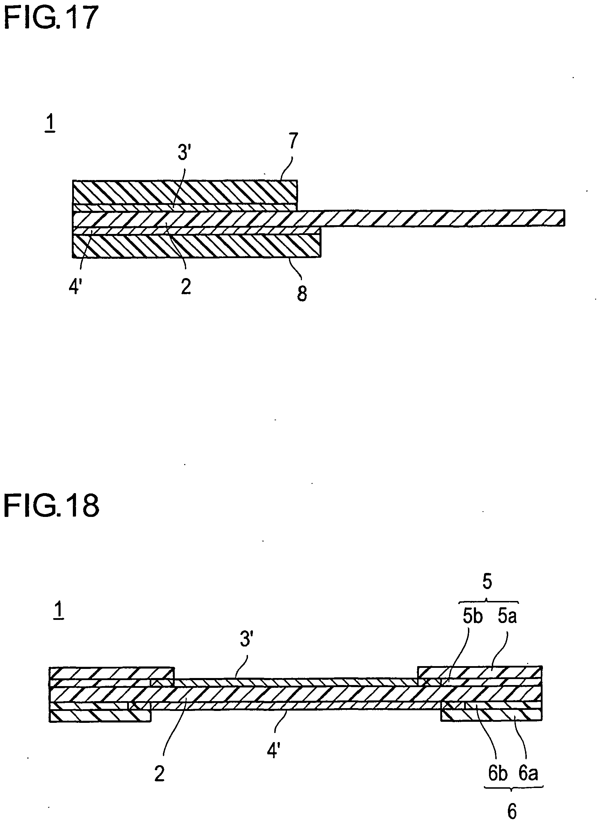

When a gasket layer-locating step is carried out after a catalytic layers-forming step, the method of the present invention may further comprise a guide member-locating step which comprises locating a guide member 7 to adjust the position of the gasket layer, between a catalytic layers-forming step and a gasket layer-locating step, as shown in Fig. 17. By this guide member-locating step, a gasket layer can be provided at more accurate position and an MEA with high reliability can be produced. In this case, a guide member used in the guide member-locating step is removed after a gasket layer is located in a gasket layer-locating step, and before an adhering step.

Specific embodiments on component material of a guide member, and the like are not especially limited. A material with low poisoning risk of a polymer electrolyte membrane or a catalytic layer may be preferably used. Typically, fluorocarbon resins such as polytetrafluoroethylene (PTFE), perfluoroalkoxy (PFA) and polyvinylidene fluoride (PVDF); acrylic resin, epoxy resin, phenolic resin, polyvinyl chloride, glass, wood, metal, and the like can be cited. Naturally, a guide member may be composed of another material.

Thickness of a guide member is not also especially limited, and can be set appropriately, so that guiding step for locating a gasket layer can efficiently be carried out. As an example, thickness of a guide member is preferably in the range of about 100 µm to about 2 cm, more preferably about 100 µm to about 3 mm. However, a guide member having thickness without this range may be used, depending on conditions.

In the method for production of the present invention, an adhering step is carried out after a catalytic layers-forming step and a gasket layer-locating step. In the adhering step, a laminate obtained by a catalytic layers-forming step and a gasket layer-locating step is pressed. By this process, a gasket layer and a polymer electrolyte membrane are adhered through an adhesive layer of a gasket layer.

Press conditions in the adhering step are also not especially limited, and conventionally well-known knowledge can be referred to, as appropriate, depending on kind of adhesive used, and the like. As an example of preferable conditions, a press pressure is preferably in the range of 0.05 to 4.0 MPa, more preferably 0.1 to 2.0 MPa, and a press time is preferably in the range of 1 second to 10 minutes, more preferably 10 seconds to 1 minute. In addition, when hot-melt type adhesive is used as adhesive, hot press is preferably carried out in an adhering step. In this case, press temperature is preferably in the range of 50 to 170°C, more preferably 90 to 150°C.

As above, although only a method for direct formation of an anode catalytic layer and a cathode catalytic layer or a gasket layer on a polymer electrolyte membrane by directly applying a catalyst ink, the MEA of the present invention may be produced by other methods such as a transcription method. A method for production in such a case is not especially limited, and a well-known transcription method can be used similarly, or after suitable modification. For example, the followingmethodcanbe used. Specifically, catalyst ink prepared by a similar method as above is applied on a transcription board and dried to form an electrode catalytic layer. In this case, as a transcription board, a well-known sheet such as a polyester sheet including a PTFE (polytetrafluoroethylene) sheet and a PET (polyethylene terephthalate) sheet can be used. A transcription board can be selected, as appropriate, depending on kind of catalyst ink used (in particular, a conductive carrier such as carbon in ink) . In this process, thickness of an electrode catalytic layer is not especially limited, so long as it is such thickness as ensuring sufficient catalytic action for oxidation of hydrogen (an anode side) and for reduction of oxygen (a cathode side), and thickness similar to a conventional one can be used. Specifically, thickness of an electrode catalytic layer may be in the range of 1 to 30 µm, more preferably 1 to 20 µm. In addition, an application method of catalyst ink onto a transcription board is not especially limited, and a well-known method such as a screen printing method, a deposition method or a spray method can similarly be applied. Furthermore, drying conditions of an electrode catalytic layer applied is also not especially limited, so long as it enables to completely remove a polar solvent from an electrode catalytic layer. Specifically, a layer applied with catalyst ink (an electrode catalytic layer) may be dried in a vacuum dryer at room temperature to 100°C, more preferably at 50 to 80°C for 30 to 60 minutes. When thickness of a catalytic layer is not sufficient in one process, the application and drying process can be repeated until desired thickness is obtained. Then after sandwiching a polymer electrolyte membrane with the resultant electrode catalytic layers, the laminated layer may be subjected to hot press. In this case, hot press conditions are not especially limited, so long as an electrode catalytic layer can be sufficiently tightly assembled with a polymer electrolyte membrane. The hot press may be preferably carried out at 100 to 200°C, more preferably 110 to 170°C, under pressure in the range of 1 to 5 MPA for an electrode surface. Under such conditions, adhesion between the polymer electrolyte membrane and the electrode catalytic layers can be enhanced. The MEA with the electrode catalytic layers and the polymer electrolyte membrane can be obtained by peeling the transcription board, after hot press.

A gasket layer and a catalytic layer may be formed at the same time on a transcription board by forming a catalytic layer on a transcription board, locating an gas impermeable layer at the peripheral part of the catalytic layer, and applying adhesive on the gas impermeable layer, in formation of a catalytic layer by the transcription method. According to such an embodiment, at the same time of transcription of a catalyst, a gasket layer is transcribed onto a polymer electrolyte membrane. Further, press in transcription step can serve also as an adhering step in the method for production of the present invention, which can provide transcription of a gasket layer and a catalytic layer onto a polymer electrolyte membrane in tightly adhered state between a gasket layer and the end part of a catalyst.

The MEA of the present invention may further have a gas diffusion layer in general, as described in detail below. In this case, a gas diffusion layer is preferably adhered to each electrode catalytic layer, by peeling a transcription board from the MEA comprising electrode catalytic layers and a polymer electrolyte membrane, and sandwiching the resultant MEA with gas diffusion layers to obtain an assembly having the MEA sandwiched with the gas diffusion layers. Alternatively, it is also preferable that electrode catalytic layers are formed on each gas diffusion layer to assemblies of electrode catalytic layer and gas diffusion layer, a polymer electrolyte membrane is sandwiched with the assemblies, and then the laminate is joined by hot press.

In this case, a gas diffusion layer used herein is not especially limited, and a well-known one can similarly be used. For example, conductive and porous sheet-likematerials such as carbon-based fabric, paper-like paper making substance, felt and non-woven fabric may be included as a substrate. Thickness of the substrate maybe determined, as appropriate, in consideration of characteristics of the resultant gas diffusion layer. It is advantageously in the range of about 30 to about 500 µm. Thickness below 30 µm may not provide sufficient mechanical strength, while thickness over 500 µm would make permeation distance of gas or water too long which is not desirable.

A method for forming an electrode catalytic layer on the surface of a gas diffusion layer is not especially limited, and a well-known method such as a screen printing method, a deposition method or a spray method can similarly be applied. In addition, forming conditions of an electrode catalytic layer on the surface of a gas diffusion layer are not especially limited, and similar conditions as used in a conventional method is applicable, depending on a specific formation method as above.

The gas diffusion layer preferably may have a water repellant agent incorporated into the substrate in order to enhance water repellency to prevent flooding phenomenon. The water repellant agent is not especially limited, and fluorine-based polymeric material such as polytetrafluoroethylene (PTFE), polyvinylidene fluoride (PVDF), polyhexafluoropropylene, a copolymer of tetrafluoroethylene-hexafluoropropylene; polypropylene, polyethylene, and the like may be included.

The gas diffusion layer may be have a carbon particles layer composed of assembly of carbon particles, including water repellent agent on the substrate, to further enhance water repellency.

The carbon particles are not especially limited, and conventional general ones such as carbon black, graphite and expandable graphite may be used. Among these, carbon black such as oil furnace black, channel black, lamp black, thermal black and acetylene black may be preferably used, because of having superior electron conductivity and high specific surface area. Particle diameter of the carbon particles is preferably in the range of about 10 to about 100 nm. By these, high water drainage performance due to capillary force can be attained and improvement of contact ability with a catalytic layer can be also attained.

As a water repellent agent used for the carbon particles layer, similar ones as the water repellent agents used in the substrate may be included. Among these, fluorine-based polymer material may be preferably used due to its superior water repellency, corrosion resistance in an electrode reaction, and the like.

As for mixing ratio of carbon particles and a water repellent agent in the carbon particles layer, an excess amount of carbon particles may not provide water repellency as expected, and an excess amount of water repellent agent may not provide sufficient electron conductivity. In consideration of theses, mixing ratio of carbon particles and a water repellent agent is preferably about 90:10 to about 40:60 in weight ratio.

Thickness of the carbon particles layer may be determined suitably, in consideration of water repellency of the resultant gas diffusion layer.

When a water repellent agent is incorporated in a gas diffusion layer, it may be carried out using a general method for water repellent treatment. For example, a method which comprises immersing a substrate used in a gas diffusion layer in a dispersion of a water repellent agent, and then heating and drying the layer in an oven, and the like may be included.

When a carbon particles layer is formed on the substrate in a gas diffusion layer, such a method may be used that carbon particles, a water repellent agent, and the like may be dispersed in a solvent such as water, perfluorobenzene, dichloropentafluoropropane, an alcoholic solvent such as methanol and ethanol, to prepare slurry, which is then applied onto a substrate and dried, or the slurry is once dried and crushed to obtain powders, which are applied onto the gas diffusion layer. Subsequently, it is preferably subjected to heat treatment at about 250 to 400°C using a muffle furnace or a firing furnace.

A method for producing an assembly containing an electrode catalytic layer and an electrolyte membrane, and preferably a gas diffusion layer is not limited to the method above. Namely, a method which comprises applying catalyst ink onto an electrolyte membrane, and drying, and treating by hot press to make electrode catalytic layers with a solid polymer electrolyte membrane assembled, and then sandwiching the resultant assembly by gas diffusion layers to obtain an MEA; and a method which comprises applying catalyst ink onto the gas diffusion layer, and drying to form electrode catalytic layers, and then treating by hot press with an electrolyte membrane to join the electrode catalytic layers with the electrolyte membrane, and the like, and various other well-known technologies may be used, as appropriate.

The electrolyte membrane-electrode assembly of the present invention, and the electrolyte membrane-electrode assembly produced by the method of the present invention can suppress deterioration of an electrolyte component contained in an electrolyte membrane-electrode assembly, as described above. In addition, by providing a gasket layer, area and position of a catalytic layer can easily be determined, and because correct position adjustment of each catalytic layer in advance is not required, it is significantly desirable in consideration of industrial mass production. Therefore, by using such an electrolyte membrane-electrode assembly, a fuel cell, whose production process is easy and having superior durability and high reliability, can be provided.

Kind of the fuel cell is not especially limited. Although a polyelectrolyte type fuel cell has been described as an example in the above Description, other ones may be also included such as an alkali type fuel cell, a direct methanol type fuel cell, and a micro fuel cell. Among these, a polyelectrolyte type fuel cell is preferably included, because compact sizing, high density and high output can be attained. In addition, the fuel cell is useful not only as power source for mobile objects such as a vehicle with limited mounting space, and also as stationary power source, in particular, it can be particularly suitably used in automotive applications wherein start/stop of a system or output variation is frequently occurs. The MEA of the present invention, because of fulfilling particular effects on deterioration of an electrolyte membrane in idle stop (OCV) state, fulfills significant effects in a polyelectrolyte type fuel cell, an alkali type fuel cell, a direct methanol type fuel cell and a micro fuel cell, wherein deterioration of the electrolyte membrane causes a problem. Therefore, application to a phosphoric acid type fuel cell is.not included, wherein such deterioration of an electrolyte membrane is not viewed as a problem.

The polyelectrolyte type fuel cell is useful as power source for mobile objects such as an automobile with limited mounting space, in addition to stationary power source. Among these, it is particularly preferable to be used as power source for mobile objects such as an automobile, wherein corrosion of a carbon carrier caused by high power output required after operation stop for relatively long time, and deterioration of a polyelectrolyte caused by taking up of high output voltage during operation easily occur.

Construction of the fuel cell is not especially limited, and conventionally well-known technology may be utilized, as appropriate. It generally has structure wherein an MEA is sandwiched by separators.

As the separator, any one can be used without limitation, so long as it has been conventionally well-known, including carbon material such as high density carbon graphite and a carbon plate, metal material such as stainless steel, and the like. A separator serves to separate air and fuel gas, and may be formed with a flow channel path to secure a flow. Thickness or size of a separator and shape of a flow channel path are not especially limited, and may be determined, as appropriate, in consideration of output characteristics of the resultant fuel cell.

In addition, a gas seal part may further be provided at a part wherein a catalytic layer is not formed on a gasket layer, to prevent outward leak of gas fed to each catalytic layer. As material composing the gas seal part, rubber material such as fluorocarbon rubber, silicone rubber, ethylene-propylene rubber (EPDM) and polyisobutylene rubber; fluorine-based polymeric material such as polytetrafluoroethylene (PTFE), polyvinylidene fluoride (PVDF), polyhexafluoropropylene, and a copolymer of tetrafluoroethylene-hexafluoropropylene; a thermoplastic resin such as polyolefin and polyester, and the like are included. Thickness of the gas seal part may be in the range of about 2 mm to about 50 µm, desirably about 1 mm to about 100 µm.

Further, a stackmay be formed by laminating and connecting plural MEA's in series through separators, to obtain desired voltage and the like, by a fuel cell. Shape of a fuel cell, and the like are not especially limited, and may be determined, as appropriate, so that desired cell characteristics such as voltage can be obtained.

### Examples

The present invention is described more specifically with referring to Examples and Comparative Examples, however, the present invention is by no means limited thereto.

### Example 1

An MEA as shown in Fig. 18 was prepared as follows:

### (Preparation of anode catalytic layer 4')

To carbon carrier (Ketjenblack EC, produced from Ketjen Black International Co., Ltd.; BET surface area=800 m²/g) having Pt particles carried thereon in a concentration of Pt carried of 50% by weight, purified water was added in an amount of 4 times weight of the carbon carrier carried with Pt particles. After the mixture was subjected to defoaming under reduced pressure for 5 minutes, 0.5 time weight of n-propyl alcohol was added thereto. Then, a solution containing 20% by weight of Nafion (registered trade name; produced from DuPont Co., Ltd., DE520) as an electrolyte was further added. The solution contained electrolyte at a weight ratio of solid content to the carbon carrier (Carbon (carbon)/Ionomer (electrolyte)) of 1.0/0.9.

The resultant mixed slurry was dispersed by means of an ultrasonic homogenizer and subjected to defoaming under reduced pressure, to prepare catalyst slurry. The resultant catalyst slurry was applied by a screen printing method on one surface of a polytetrafluoroethylene sheet (7.5 cm×7.5 cm, a thickness of 0.08 mm) in an amount so as to give desired thickness, and the coating was dried at 60°C for 24 hours. Size of the anode catalytic layer produced by a screen printing method was set to be 5.2 cm×5.2 cm. In addition, the coating layer on the polytetrafluoroethylene sheet was adjusted so that Pt content was 0.4 mg/cm².

### (Preparation of cathode catalytic layer 3')

To carbon carrier (Ketjenblack EC, produced from Ketjen Black International Co., Ltd.; BET surface area=800 m²/g) having Pt particles carried thereon in a concentration of Pt carried of 50% by weight, purified water was added in an amount of 4 times weight of the carbon carrier carried with Pt particles. After the mixture was subjected to defoaming under reduced pressure for 5 minutes, 0.5 time weight of n-propyl alcohol was added thereto. Then, a solution containing 20% by weight of Nafion (registered trade name; produced from DuPont Co., Ltd., DE520) as an electrolyte was further added. The solution contained electrolyte at a weight ratio of solid content to the carbon carrier (Carbon (carbon)/Ionomer (electrolyte)) of 1.0/0.9.

The resultant mixed slurry was dispersed by means of an ultrasonic homogenizer and subjected to defoaming under reduced pressure, to prepare catalyst slurry. The resultant catalyst slurry was applied by a screen printing method on one surface of a polytetrafluoroethylene sheet (7.5 cm×7.5 cm, a thickness of 0.08 mm) in an amount so as to give desired thickness, and the coating was dried at 60°C for 24 hours. Size of the cathode catalytic layer produced by a screen printing method was set to be 5.1 cm×5.1 cm. In addition, the coating layer on the polytetrafluoroethylene sheet was adjusted so that Pt content was 0.4 mg/cm².

### (Preparation of electrolyte membrane-electrode assembly (MEA) 1)

Using a fluorine-based electrolyte membrane without a reinforcing layer (7.5 cm×7.5 cm, a membrane thickness of 25 µm) as a solid polymer electrolyte membrane, this solid polymer electrolyte membrane was overlapped on the anode catalytic layer formed on polytetrafluoroethylene sheet, and further the cathode catalytic layer formed on polytetrafluoroethylene sheet was overlapped, to obtain a laminate. Then, the laminate was subjected to hot press at 130°C under 2.0 MPa for 10 minutes, and subsequently the polytetrafluoroethylene sheet was peeled off, to make a membrane-electrode assembly.

The cathode catalytic layer transcribed on the solid polymer electrolyte membrane had an amount of Pt carried of 0.4 mg based on an apparent electrode area of 1 cm², and an electrode surface area of 26 cm². The anode catalytic layer had an amount of Pt carried of 0.4 mg based on an apparent electrode area of 1 cm², and electrode surface area of 27 cm².

### (Formation of second gasket layer 6 at end part of anode catalytic layer 4')

A PEN film having a urethane-based hot-melt type adhesive layer (produced from Teij in Dupont Film Japan Ltd. : a PEN thickness of 25µm and an adhesive layer thickness of 25 µm) was punched out in overall size of 7.2 cm×7.2 cm. Then, an opening with size of 5.1 cm×5.1 cm was punched out at the center part of the square PEN film, to prepare a frame-like second gasket layer having a frame width of 1.05 cm. Subsequently, a Hyper sheet (produced from Japan Goretex Co., Ltd.; a thickness of 1.5 mm) was punched out in overall size of 5.1 cm×5.1 cm, to prepare a square Hyper sheet. Separately, a Hyper sheet (produced from Japan Goretex Co., Ltd.; a thickness of 1.5 mm) was punched out in overall size of 7.2 cm×7.2 cm, and then an opening with size of 5.1 cm×5.1 cm was punched out at the center part of the square sheet, to prepare a frame-like Hyper sheet having a frame width of 1.05 cm.

The MEA prepared above was set so that an anode catalytic layer (5.2 cm×5.2 cm) was located upper side. Then, the square Hyper sheet (5.1 cm×5.1 cm) prepared above was set at the center thereof so that the peripheral part of the anode catalytic layer protruded uniformly (0.5 mm) . In this state, the second gasket layer prepared above was located with an adhesive layer being downward, so that the opening part of the second gasket layer was located along the peripheral part of the Hyper sheet. After the second gasket layer is provided, the frame-like Hyper sheet prepared above was located along the peripheral part of the Hyper sheet, so that it overlaps on the second gasket layer, to prepare a CCM-gasket layer-Hyper sheet.

### (Formation of first gasket layer 5 at end part of cathode catalytic layer 3')

A PEN film having a urethane-based hot-melt type adhesive layer (produced from Teij in Dupont Film Japan Ltd.: a PEN thickness of 25µm and an adhesive layer thickness of 25 µm) was punched out in overall size of 7.2 cm×7.2 cm. Then, an opening with size of 5.0 cm×5.0 cm was punched out at the center part of the square PEN film, to prepare a frame-like first gasket layer having a frame width of 1.1 cm. Subsequently, a Hyper sheet (produced from Japan Goretex Co., Ltd.; a thickness of 1.5 mm) was punched out in overall size of 5.0 cm×5.0 cm, to prepare a square Hyper sheet. Separately, a Hyper sheet (produced from Japan Goretex Co., Ltd.; a thickness of 1.5 mm) was punched out in overall size of 7.2 cm×7.2 cm, and then an opening with size of 5.0 cm×5.0 cm was punched out at the center part of the square sheet, to prepare a frame-like Hyper sheet having a frame width of 1.1.cm.

The CCM-gasket layer-Hyper sheet prepared by forming the second gasket layer on the anode catalytic layer, was turned over as a unit and set so that a cathode catalytic layer (5.1 cm×5.1 cm) was located at the upper side. Then, similarly as in the above process for "formation of second gasket layer at end part of anode catalytic layer", the square Hyper sheet (5.0 cm×5.0 cm) prepared above was set at the center thereof so that the peripheral part of an anode catalytic layer protruded uniformly (0.5 mm). In this state, the first gasket layer prepared above was located with an adhesive layer being downward, so that the opening part of the first gasket layer was located along the peripheral part of the Hyper sheet. After the first gasket layer is provided, the frame-like Hyper sheet prepared above was located along the peripheral part of the Hyper sheet, so that it overlaps on the first gasket layer. As a result, the gasket layer and the frame-like Hyper sheet were provided at both sides of anode and cathode of an MEA. Then, the square Hyper sheet located on each catalytic layer was taken of ffromthis unit, and the remaining unit was sandwiched from both sides with SUS plates (size of 7.4 cm×7.4 cm and a thickness of 1 mm), and subjected to thermocompression using a hot press machine at 130°C under 0.4 MPa for 1 minute, to obtain such structure as holes of catalytic layers were sufficiently filled so that gas did not penetrate into the end part of the catalytic layer overlapped with a gasket layer.

### Comparative Example 1

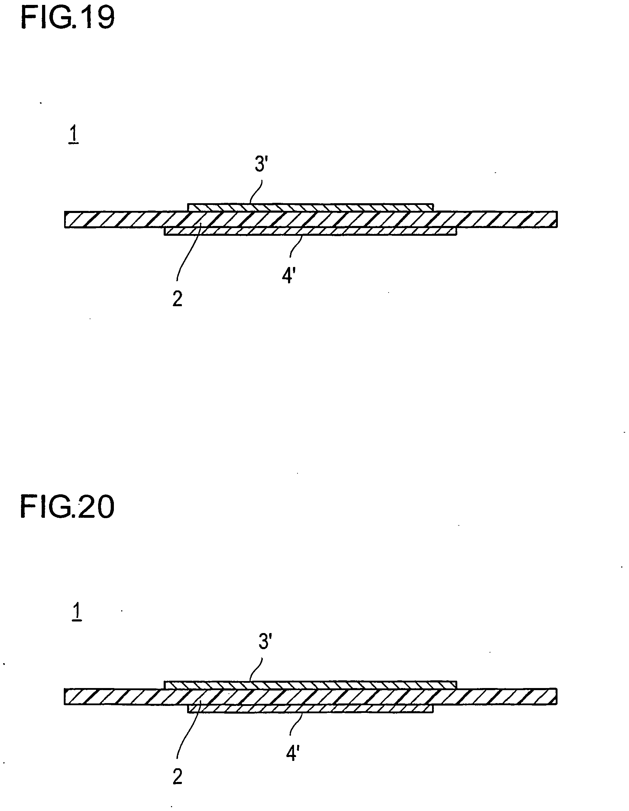

An MEA as shown in Fig. 19 was prepared as follows:

### (Preparation of anode catalytic layer 4')

To carbon carrier (Ketjenblack EC, produced from Ketjen Black International Co., Ltd.; BET surface area=800m²/g) having Pt particles carried thereon in a concentration of Pt carried of 50% by weight, purified water was added in an amount of 4 times weight of the carbon carrier carried with Pt particles. After the mixture was subjected to defoaming under reduced pressure for 5 minutes, 0.5 time weight of n-propyl alcohol was added thereto. Then, a solution containing 20% by weight of Nafion (registered trade name; produced from DuPont Co., Ltd., DE520) as an electrolyte was further added. The solution contained electrolyte at a weight ratio of solid content to the carbon carrier (Carbon (carbon)/Ionomer (electrolyte)) of 1.0/0.9.

The resultantmixed slurry was dispersed by means of an ultrasonic homogenizer and subjected to defoaming under reduced pressure, to prepare catalyst slurry. The resultant catalyst slurry was applied by a screen printingmethod on one surface of a polytetrafluoroethylene sheet (7.5 cm×7.5 cm, a thickness of 0.08 mm) in an amount so as to give desired thickness, and the coating was dried at 60°C for 24 hours. Size of the anode catalytic layer produced by a screen printing method was set to be 5.1 cm×5.1 cm. In addition, the coating layer on the polytetrafluoroethylene sheet was adjusted so that Pt content was 0.4 mg/cm².

### (Preparation of cathode catalytic layer 3')

To carbon carrier (Ketjenblack EC, produced from Ketjen Black International Co., Ltd.; BETsurface area=800 m²/g) having Pt particles carried thereon in a concentration of Pt carried of 50% by weight, purified water was added in an amount of 4 times weight of the carbon carrier carried with Pt particles. After the mixture was subjected to defoaming under reduced pressure for 5 minutes, 0.5 time weight of n-propyl alcohol was added thereto. Then, a solution containing 20% by weight of Nafion (registered trade name; produced from DuPont Co., Ltd., DE520) as an electrolyte was further added. The solution contained electrolyte at a weight ratio of solid content to the carbon carrier (Carbon (carbon)/Ionomer (electrolyte)) of 1.0/0.9.

The resultant mixed slurry was dispersed by means of an ultrasonic homogenizer and subjected to defoaming under reduced pressure, to prepare catalyst slurry. The resultant catalyst slurry was applied by a screen printing method on one surface of a polytetrafluoroethylene sheet (7.5 cm×7.5 cm, a thickness of 0.08 mm) in an amount so as to give desired thickness, and the coating was dried at 60°C for 24 hours. Size of the cathode catalytic layer produced by a screen printing method was set to be 5.0 cm×5.0 cm. In addition, the coating layer on the polytetrafluoroethylene sheet was adjusted so that Pt content was 0.4 mg/cm².

### (Preparation of electrolyte membrane-electrode assembly (MEA) 1)

Using a fluorine-based electrolyte membrane without a reinforcing layer (7.5 cm×7.5 cm, a membrane thickness of 25 µm) as a solid polymer electrolyte membrane, this solid polymer electrolyte membrane was overlapped on the anode catalytic layer formed on polytetrafluoroethylene sheet, and further the cathode catalytic layer formed on polytetrafluoroethylene sheet was overlapped, to obtain a laminate. Then, the laminate was subjected to hot press at 130°C under 2.0 MPa for 10 minutes, and subsequently the polytetrafluoroethylene sheet was peeled off, to make a membrane-electrode assembly.

The cathode catalytic layer transcribed on the solid polymer electrolyte membrane had an amount of Pt carried of 0.4 mg based on an apparent electrode area of 1 cm², and an electrode surface area of 25 cm². The anode catalytic layer had an amount of Pt carried of 0.4 mg based on an apparent electrode area of 1 cm², and electrode surface area of 26 cm².

### Comparative Example 2

An MEA as shown in Fig. 20 was prepared.as follows:

### (Preparation of anode catalytic layer 4')

To carbon carrier (Ketjenblack EC, produced from Ketjen Black International Co., Ltd.; BET surface area=800 m²/g) having Pt particles carried thereon in a concentration of Pt carried of 50% by weight, purified water was added in an amount of 4 times weight of the carbon carrier carried with Pt particles. After the mixture was subjected to defoaming under reduced pressure for 5 minutes, 0.5 time weight of n-propyl alcohol was added thereto. Then, a solution containing 20% by weight of Nafion (registered trade name; produced from DuPont Co., Ltd., DE520) as an electrolyte was further added. The solution contained electrolyte at a weight ratio of solid content to the carbon carrier (Carbon (carbon)/Ionomer (electrolyte)) of 1.0/0.9.

The resultant mixed slurry was dispersed by means of an ultrasonic homogenizer and subjected to defoaming under reduced pressure, to prepare catalyst slurry. The resultant catalyst slurry was applied by a screen printing method on one surface of a polytetrafluoroethylene sheet (7.5 cm×7.5 cm, a thickness of 0.08 mm) in an amount so as to give desired thickness, and the coating was dried at 60°C for 24 hours. Size of the anode catalytic layer produced by a screen printing method was set to be 5.0 cm×5.0 cm. In addition, the coating layer on the polytetrafluoroethylene sheet was adjusted so that Pt content was 0.4 mg/cm².

### (Preparation of cathode catalytic layer 3')

To carbon carrier (Ketjenblack EC, produced from Ketjen Black International Co., Ltd.; BET surface area=800 m²/g) having Pt particles carried thereon in a concentration of Pt carried of 50% by weight, purified water was added in an amount of 4 times weight of the carbon carrier carried with Pt particles. After the mixture was subjected to defoaming under reduced pressure for 5 minutes, 0.5 time weight of n-propyl alcohol was added thereto. Then, a solution containing 20% by weight of Nafion (registered trade name; produced from DuPont Co., Ltd., DE520) as an electrolyte was further added. The solution contained electrolyte at a weight ratio of solid content to the carbon carrier (Carbon (carbon)/Ionomer (electrolyte)) of 1.0/0.9.

The resultant mixed slurry was dispersed by means of an ultrasonic homogenizer and subjected to defoaming under reduced pressure, to prepare catalyst slurry. The resultant catalyst slurry was applied by a screen printing method on one surface of a polytetrafluoroethylene sheet (7.5 cm×7.5 cm, a thickness of 0.08 mm) in an amount so as to give desired thickness, and the coating was dried at 60°C for 24 hours. Size of the cathode catalytic layer produced by a screen printing method was set to be 5.1 cm×5.1 cm. In addition, the coating layer on the polytetrafluoroethylene sheet was adjusted so that Pt content was 0.4 mg/cm².

### (Preparation of electrolyte membrane-electrode assembly (MEA) 1)

Using a fluorine-based electrolyte membrane without a reinforcing layer (7.5 cm×7.5 cm, a membrane thickness of 25 µm) as a solid polymer electrolyte membrane, this solid polymer electrolyte membrane was overlapped on the anode catalytic layer formed on polytetrafluoroethylene sheet, and further the cathode catalytic layer formed on polytetrafluoroethylene sheet was overlapped, to obtain a laminate. Then, the laminate was subjected to hot press at 130°C under 2.0 MPa for 10 minutes, and subsequently the polytetrafluoroethylene sheet was peeled off, to make a membrane-electrode assembly.

The cathode catalytic layer transcribed on the solid polymer electrolyte membrane had an amount of Pt carried of 0.4 mg based on an apparent electrode area of 1 cm², and an electrode surface area of 26 cm². The anode catalytic layer had an amount of Pt carried of 0.4 mg based on an apparent electrode area of 1 cm² and electrode surface area of 25 cm².

### Comparative Example 3

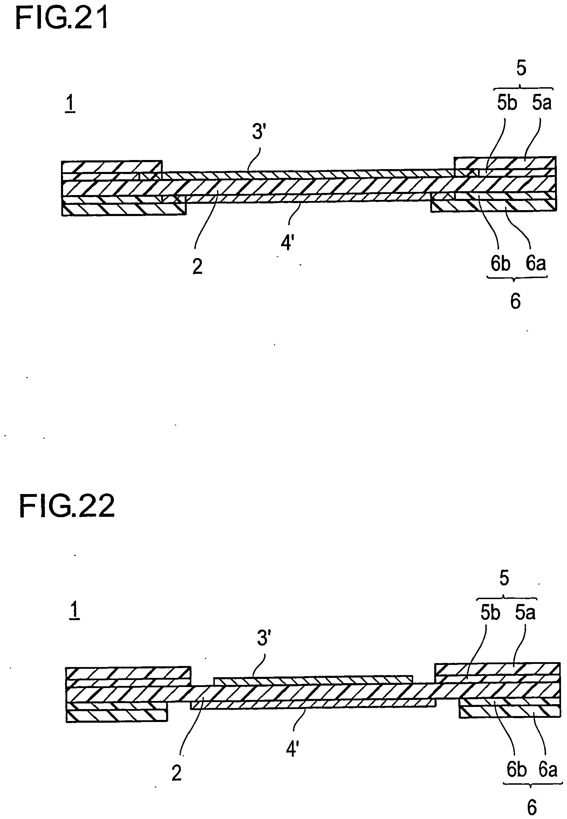

An MEA as shown in Fig. 21 was prepared as follows:

### (Preparation of anode catalytic layer 4')

To carbon carrier (Ketjenblack EC, produced from Ketjen Black International Co., Ltd.; BET surface area=800 m²/g) having Pt particles carried thereon in a concentration of Pt carried of 50% by weight, purified water was added in an amount of 4 times weight of the carbon carrier carried with Pt particles. After the mixture was subjected to defoaming under reduced pressure for 5 minutes, 0.5 time weight of n-propyl alcohol was added thereto. Then, a solution containing 20% by weight of Nafion (registered trade name; produced from DuPont Co., Ltd., DE520) as an electrolyte was further added. The solution contained electrolyte at a weight ratio of solid content to the carbon carrier (Carbon (carbon)/Ionomer (electrolyte)) of 1.0/0.9.

The resultant mixed slurry was dispersed by means of an ultrasonic homogenizer and subjected to defoaming under reduced pressure, to prepare catalyst slurry. The resultant catalyst slurry was applied by a screen printingmethod on one surface of a polytetrafluoroethylene sheet (7.5 cm×7.5 cm, a thickness of 0.08 mm) in an amount so as to give desired thickness, and the coating was dried at 60°C for 24 hours. Size of the anode catalytic layer produced by a screen printing method was set to be 5.1 cm×5.1 cm. In addition, the coating layer on the polytetrafluoroethylene sheet was adjusted so that Pt content was 0.4 mg/cm².

### (Preparation of cathode catalytic layer 3')

To carbon carrier (Ketjenblack EC, produced from Ketjen Black International Co., Ltd.; BET surface area=800m²/g) having Pt particles carried thereon in a concentration of Pt carried of 50% by weight, purified water was added in an amount of 4 times weight of the carbon carrier carried with Pt particles. After the mixture was subjected to defoaming under reduced pressure for 5 minutes, 0.5 time weight of n-propyl alcohol was added thereto. Then, a solution containing 20% by weight of Nafion (registered trade name; produced from DuPont Co., Ltd., DE520) as an electrolyte was further added. The solution contained electrolyte at a weight ratio of solid content to the carbon carrier (Carbon (carbon)/Ionomer (electrolyte)) of 1.0/0.9.

The resultant mixed slurry was dispersed by means of an ultrasonic homogenizer and subjected to defoaming under reduced pressure, to prepare catalyst slurry. The resultant catalyst slurry was applied by a screen printing method on one surface of a polytetrafluoroethylene sheet (7.5 cm×7.5 cm, a thickness of 0.08 mm) in an amount so as to give desired thickness, and the coating was dried at 60°C for 24 hours. Size of the cathode catalytic layer produced by a screen prinking method was set to be 5.2 cm×5.2 cm. In addition, the coating layer on the polytetrafluoroethylene sheet was adjusted so that Pt content was 0.4 mg/cm².

### (Preparation of electrolyte membrane-electrode assembly (MEA) 1)

Using a fluorine-based electrolyte membrane without a reinforcing layer (7.5 cm×7.5 cm, a membrane thickness of 25 µm) as a solid polymer electrolyte membrane, this solid polymer electrolyte membrane was overlapped on the anode catalytic layer formed on polytetrafluoroethylene sheet, and further the cathode catalytic layer formed on polytetrafluoroethylene sheet was overlapped, to obtain a laminate. Then, the laminate was subjected to hot press at 130°C under 2.0 MPa for 10 minutes, and subsequently the polytetrafluoroethylene sheet was peeled off, to make a membrane-electrode assembly.

The cathode catalytic layer transcribed.on the solid polymer electrolyte membrane had an amount of Pt carried of 0.4 mg based on an apparent electrode area of 1 cm², and an electrode surface area of 27 cm² The anode catalytic layer had an amount of Pt carried of 0. 4 mg based on an apparent electrode area of 1 cm², and electrode surface area of 26 cm².

### (Formation of second gasket layer 6 at end part of anode catalytic layer 4')

A PEN film having a urethane-based hot-melt type adhesive layer (produced from Teijin Dupont Film Japan Ltd. : a PEN thickness of 25µm and an adhesive layer thickness of 25 µm) was punched out in overall size of 7.2 cm×7.2 cm. Then, an opening with size of 5.0 cm×5.0 cm was punched out at the center part of the square PEN film, to prepare a frame-like second gasket layer having a frame width of 1.1 cm. Subsequently, a Hyper sheet (produced from Japan Goretex Co., Ltd.; a thickness of 1.5 mm) was punched out in overall size of 5.0 cm5.0 cm, to prepare a square Hyper sheet. Separately, a Hyper sheet (produced from Japan Goretex Co., Ltd.; a thickness of 1.5 mm) was punched out in overall size of 7.2 cm×7.2 cm, and then an opening with size of 5.0 cm×5.0 cm was punched out at the center part of the square sheet, to prepare a frame-like Hyper sheet having a frame width of 1.1 cm.

The MEA prepared above was set so that an anode catalytic layer (5.1 cm×5.1 cm) was located upper side. Then, the square Hyper sheet (5.0 cm×5.0 cm) prepared above was set at the center thereof so that the peripheral part of the anode catalytic layer protruded uniformly (0.5 mm). In this state, the second gasket layer prepared above was located with an adhesive layer being downward, so that the opening part of the second gasket layer was located along the peripheral part of the Hyper sheet. After the second gasket layer is provided, the frame-like Hyper sheet prepared above was located along the peripheral part of the Hyper sheet, so that it overlaps on the second gasket layer, to prepare a CCM-gasket layer-Hyper sheet.

### (Formation of first gasket layer 5 at end part of cathode catalytic layer 3')

A PEN film having a urethane-based hot-melt type adhesive layer (produced from Teij in Dupont Film Japan Ltd.: a PEN thickness of 25µm and an adhesive layer thickness of 25 µm) was punched out in overall size of 7.2 cm×7.2 cm. Then, an opening with size of 5.1 cm×5.1 cm was punched out at the center part of the square PEN film, to prepare a frame-like first gasket layer having a frame width of 1.05 cm. Subsequently, a Hyper sheet (produced from Japan Goretex Co., Ltd.; a thickness of 1.5 mm) was punched out in overall size of 5.1 cm×5.1 cm, to prepare a square Hyper sheet. Separately, a Hyper sheet (produced from Japan Goretex Co., Ltd.; a thickness of 1.5 mm) was punched out in overall size of 7.2 cm×7.2 cm, and then an opening with size of 5.1 cm×5.1 cm was punched out at the center part of the square sheet, to prepare a frame-like Hyper sheet having a frame width of 1.05 cm.

The CCM-gasket layer-Hyper sheet prepared by forming the second gasket layer on the anode catalytic layer, was turned over as a unit and set so that a cathode catalytic layer (5.2 cm×5.2 cm) was located at the upper side. Then, similarly as in the above process for "formation of secondgasket layer at endpart of anode catalytic layer", the square Hyper sheet (5.1 cm×5.1 cm) prepared above was set at the center thereof so that the peripheral part of an anode catalytic layer protruded uniformly (0.5 mm). In this state, the first gasket layer prepared above was located with an adhesive layer being downward, so that the opening part of the first gasket layer was located along the peripheral part of the Hyper sheet. After the first gasket layer is provided, the frame-like Hyper sheet prepared above was located along the peripheral part of the Hyper sheet, so that it overlaps on the first gasket layer. As a result, the gasket layer and the frame-like Hyper sheet were provided at both sides of anode and cathode of an MEA. Then, the square Hyper sheet located on each catalytic layer was taken of f fromthis unit, and the remaining unit was sandwiched from both sides with SUS plates (size of 7.4 cm×7.4 cm and a thickness of 1 mm), and subjected to thermocompression using a hot press machine at 130°C under 0.4 MPa for 1 minute, to obtain such structure as holes of catalytic layers were sufficiently filled so that gas did not penetrate into the end part of the catalytic layer overlapped with a gasket layer.

### Comparative Example 4

An MEA as shown in Fig. 22 was prepared as follows:
First, a membrane-electrode assembly (an MEA) was prepared after preparation of an anode catalytic layer and a cathode catalytic layer, by following the method described in Comparative Example 1.

### (Formation of second gasket layer 6 at end part of anode catalytic layer 4')

A PEN film having a urethane-based hot-melt type adhesive layer (produced from Teij in Dupont Film Japan Ltd.: a PEN thickness of 25µm and an adhesive layer thickness of 25 µm) was punched out in overall size of 7.2 cm×7.2 cm. Then, an opening with size of 5.2 cm×5.2 cm was punched out at the center part of the square PEN film, to prepare a frame-like second gasket layer having a frame width of 1.0 cm. Subsequently, a Hyper sheet (produced from Japan Goretex Co., Ltd.; a thickness of 1.5 mm) was punched out in overall size of 5.2 cm5.2 cm, to prepare a square Hyper sheet. Separately, a Hyper sheet (produced from Japan Goretex Co., Ltd.; a thickness of 1.5 mm) was punched out in overall size of 7.2 cm×7.2 cm, and then an opening with size of 5.2 cm×5.2 cm was punched out at the center part of the square sheet, to prepare a frame-like Hyper sheet having a frame width of 1. 0 cm.

The MEA prepared above was set so that an anode catalytic layer (5.1 cm×5.1 cm) was located-upper side. Then, the square Hyper sheet (5.2 cm×5.2 cm) prepared above was set at the center thereof so that the peripheral part of the anode catalytic layer protruded uniformly (0.5 mm). In this state, the second gasket layer prepared above was located with an adhesive layer being downward, so that the opening part of the second gasket layer was located along the peripheral part of the Hyper sheet. After the second gasket layer is provided, the frame-like Hyper sheet prepared above was located along the peripheral part of the Hyper sheet, so that it overlaps on the second gasket layer, to prepare a CCM-gasket layer-Hyper sheet.

### (Formation of first gasket layer 5 at end part of cathode catalytic layer 3')

A PEN film having a urethane-based hot-melt type adhesive layer (produced from Teij in Dupont Film Japan Ltd.: a PEN thickness of 25µm and an adhesive layer thickness of 25 µm) was punched out in overall size of 7.2 cm×7.2 cm. Then, an opening with size of 5.1 cm×5.1 cm was punched out at the center part of the square PEN film, to prepare a frame-like first gasket layer having a frame width of 1.05 cm. Subsequently, a Hyper sheet (produced from Japan Goretex Co., Ltd.; a thickness of 1.5 mm) was punched out in overall size of 5.1 cm×5.1 cm, to prepare a square Hyper sheet. Separately, a Hyper sheet (produced from Japan Goretex Co., Ltd.; a thickness of 1.5 mm) was punched out in overall size of 7.2 cm×7.2 cm, and then an opening with size of 5.1 cm×5.1 cm was punched out at the center part of the square sheet, to prepare a frame-like Hyper sheet having a frame width of 1.05 cm.

The CCM-gasket layer-Hyper sheet prepared by forming the second gasket layer on the anode catalytic layer, was turned over as a unit and set so that a cathode catalytic layer (5.0 cm×5.0 cm) was located at the upper side. Then, similarly as in the above process for "formation of second gasket layer at end part of anode catalytic layer", the square Hyper sheet (5.1 cm×5.1 cm) prepared above was set at the center thereof so that the peripheral part of an anode catalytic layer protruded uniformly (0.5 mm). In this state, the first gasket layer prepared above was located with an adhesive layer being downward, so that the opening part of the first gasket layer was located along the peripheral part of the Hyper sheet. After the first gasket layer is provided, the frame-like Hyper sheet prepared above was located along the peripheral part of the Hyper sheet, so that it overlaps on the first gasket layer. As a result, the gasket layer and the frame-like Hyper sheet were provided at both sides of anode and cathode of an MEA. Then, the square Hyper sheet located on each catalytic layer was taken off fromthis unit, and the remaining unit was sandwiched from both sides with SUS plates (size of 7.4 cm×7.4 cm and a thickness of 1 mm), and subjected to thermocompression using a hot press machine at 130°C under 0.4 MPa for 1 minute, to obtain such structure as holes of catalytic layers were sufficiently filled so that gas did not penetrate into the end part of the catalytic layer overlapped with a gasket layer.

### Example 2: OCV duration test

The performance of each the membrane-electrode assemblies obtained in Example 1 and Comparative Examples 1 to 4 was evaluated as follows:

### (Evaluation method)

Carbon paper (size of 6.0 cm×5.5 cm and a thickness of 200 µm) as a gas diffusion layer and a gas separator equipped with gas passages were each located at both sides of a membrane-electrode assembly, and further sandwiched with gold plated current collection plates made of stainless steel, to provide a unit cell for evaluation.

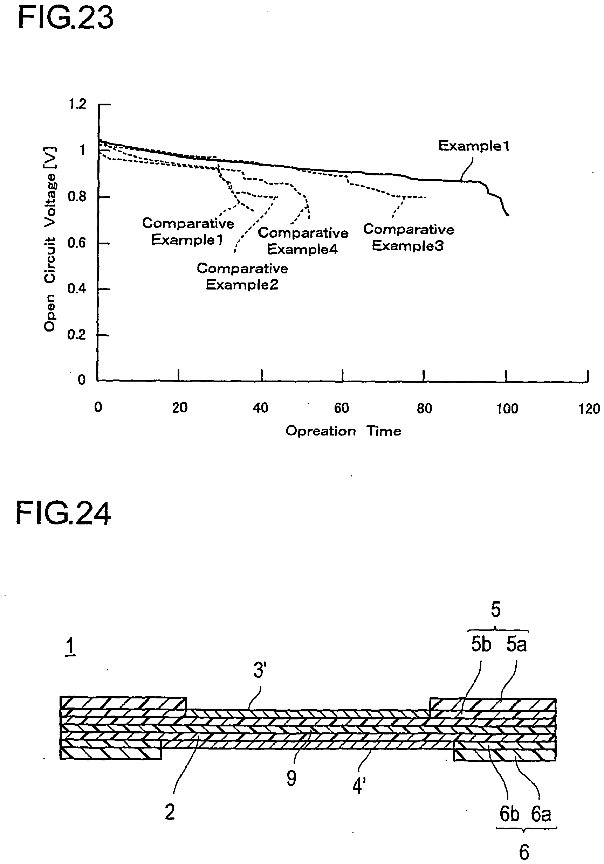

Hydrogen gas was supplied as fuel to the anode of the unit cell for evaluation, and also oxygen was supplied as an oxidizing agent to the cathode thereof. In this evaluation, back pressures of both hydrogen gas and oxygen gas were set to be atmospheric pressure, and cell temperature was set at 90°C. In addition, other conditions were set as follows: Hydrogen gas flow amount: 500 cm³/minute; and temperature: 61.2°C (relative humidity: 30% at 90°C). Change in time course of OCV (Open Circuit Voltage) during the operation of the unit cell under the above conditions was measured and the results are shown in Fig. 23. In Fig. 23, abscissa axis represents an operation time (hour), and ordinate axis represents an open circuit voltage (OCV) (V). Further, the point where OCV suddenly dropped in Fig. 23 is considered to correspond to the time when a hole was created in the electrolyte membrane of MEA.

As shown in Fig. 23, unit cells equipped with MEA' s of Comparative Examples 1 and 2 without a gasket layer showed sudden decrease in OCV at 28 hours of duration test hour. On the contrary, a unit cell equipped with MEA of Example 1 having gasket layers which overlaps with the end parts of the catalytic layers, and having the effective anode layer larger than the effective cathode layer, showed sudden decrease in OCV at 96 hours. From these results, it is observed that by providing a gasket layer at the end part of a catalytic layer, the MEA of the present invention can effectively suppress decomposition of an electrolyte membrane in OCV retention, as compared with one without a gasket layer at the end part of the catalytic layer. In addition, a unit cell equipped with MEA of Comparative Example 3 having gasket layers which overlaps with the endparts of the catalytic layers, and having the effective cathode anode layer larger than the effective anode layer, showed sudden drop of OCV at 60 hours. This result shows that, by making area of an anode effective catalytic layer larger than area of a cathode effective catalytic layer, OCV durability retaining performance can significantly be improved. Furthermore, as for a unit cell equipped with MEA of Comparative Example 4 having the effective anode layer larger than the effective cathode layer, and having a gap between the inner end part of the opening of the gasket layer and the end part of the catalytic layer, OCV suddenly dropped at 37 hours. From these results, it is noted that in the case of not adopting such structure that the end part of a catalytic layer does not permit gas penetration, as in the present invention, OCV drops suddenly in a short period even by making area of an effective anode catalytic layer larger than an effective cathode catalytic layer side, and thus superior OCV durability retaining performance cannot be attained.

In addition to the results and observation, hole opening in an electrolyte membrane was observed, after the OCV duration test, by disassembling a unit cell to remove one of the gas separators equipped with a gas passage, mounting an acryl plate with specified shape instead to fix an MEA, and pressurizing (about 10 kPa) the MEA by feeding helium gas from the remaining gas separator, to carry out visualized leak test. As a result, it was confirmed that in the MEA's of Comparative Examples 1, 2 and 4, relatively many helium bubbles were generated from the vicinity of the end part of the catalytic layer, while in the MEA's of Example 1 and Comparative Example 3, helium bubbles generation was confirmed from the entire surface of the catalytic layer, but not from the end part thereof.

From these results, the MEA of Example 1. was confirmed to be able to significantly improve OCV durability as compared with other MEA's.

### Example 3

An MEA as shown in Fig. 24 was prepared as follows:

### (Preparation of anode catalytic layer 4')

To carbon carrier (Ketjenblack EC, produced from Ketjen Black International Co., Ltd.; BET surface area=800 m²/g) having Pt particles carried thereon in a concentration of Pt carried of 50% by weight, purified water and propylene glycol were added each in an amount of 3 times weight of the carbon carrier carried with Pt particles. After the mixture was subjected to defoaming under reduced pressure for 5 minutes, 0.5 time weight of n-propyl alcohol was added thereto. Then, a solution containing 20% by weight of Nafion (registered trade name; produced from DuPont Co., Ltd., DE520) as an electrolyte was further added. The solution contained electrolyte at a weight ratio of solid content to the carbon carrier (Carbon (carbon)/Ionomer (electrolyte)) of 1.0/0.9.

The resultantmixedslurrywas dispersed by means of an ultrasonic homogenizer and subjected to defoaming under reduced pressure, to prepare catalyst slurry. The resultant catalyst slurry was applied by a screen printing method on one surface of a polytetrafluoroethylene sheet (7.5 cm×7.5 cm, a thickness of 0.08 mm) in an amount so as to give desired thickness, and the coating was dried at 60°C for 24 hours. Size of the anode catalytic layer produced by a screen printing method was set to be 5.1 cm×5.1 cm. In addition, the coating layer on the polytetrafluoroethylene sheet was adjusted so that Pt content was 0.05 mg/cm².

### (Preparation of cathode catalytic layer 3')

To carbon carrier (Ketjenblack EC, produced from Ketjen Black International Co., Ltd.; BET surface area=800 m²/g) having Pt particles carried thereon in a concentration of Pt carried of 50% by weight, purified water and propylene glycol were added each in an amount of 3 times weight of the carbon carrier carried with Pt particles. After the mixture was subjected to defoaming under reduced pressure for 5 minutes, 0.5 time weight of n-propyl alcohol was added thereto. Then, a solution containing 20% by weight of Nafion (registered trade name; produced from DuPont Co., Ltd., DE520) as an electrolyte was further added. The solution contained electrolyte at a weight ratio of solid content to the carbon carrier (Carbon (carbon)/Ionomer (electrolyte)) of 1.0/0.9.

The resultant mixed slurry was dispersed by means of an ultrasonic homogenizer and subjected to defoaming under reduced pressure, to prepare catalyst slurry. The resultant catalyst slurry was applied by a screen printing method on one surface of a polytetrafluoroethylene sheet (7.5 cm×7.5 cm, a thickness of 0.08 mm) in an amount so as to give desired thickness, and the coating was dried at 60°C for 24 hours. Size of the cathode catalytic layer produced by a screen printing method was set to be 5.0 cm×5.0 cm. In addition, the coating layer on the polytetrafluoroethylene sheet was adjusted so that Pt content was 0.35 mg/cm².

### (Preparation of electrolyte membrane-electrode assembly (MEA) 1)

Using a fluorine-based electrolyte membrane having a reinforcing layer (in Fig. 24, shown by symbol 9) (7.5 cm×7.5 cm, a membrane thickness of 25 µm) as a solid polymer electrolyte membrane, this solid polymer electrolyte membrane was overlapped on the anode catalytic layer formed on polytetrafluoroethylene sheet, and further the cathode catalytic layer formed on polytetrafluoroethylene sheet was overlapped, to obtain a laminate. Then, the laminate was subj ected to hot press at 130°C under 2.0 MPa for 10 minutes, and subsequently the polytetrafluoroethylene sheet was peeled off, to make a membrane-electrode assembly.

The cathode catalytic layer transcribed on the solid polymer electrolyte membrane had an amount of Pt carried of 0.4 mg based on an apparent electrode area of 1 cm², and an electrode surface area of 25 cm². The anode catalytic layer had an amount of Pt carried of 0.4 mg based on an apparent electrode area of 1 cm², and electrode surface area of 26 cm².

### (Formation of second gasket layer 6 at end part of anode catalytic layer 4')

A PEN film having a urethane-based hot-melt type adhesive layer (produced from Teij in Dupont Film Japan Ltd. : a PEN thickness of 25µm and an adhesive layer thickness of 25 µm) was punched out in overall size of 7.2 cm×7.2 cm. Then, an opening with size of 5.1 cm×5.1 cm was punched out at the center part of the square PEN film, to prepare a frame-like second gasket layer having a frame width of 1.05 cm. Subsequently, a Hyper sheet (produced from Japan Goretex Co., Ltd.; a thickness of 1.5 mm) was punched out in overall size of 5.1 cm×5.1 cm, to prepare a square Hyper sheet. Separately, a Hyper sheet (produced from Japan Goretex Co., Ltd.; a thickness of 1.5 mm) was punched out in overall size of 7.2 cm×7.2 cm, and then an opening with size of 5.1 cm×5.1 cm was punched out at the center part of the square sheet, to prepare a frame-like Hyper sheet having a frame width of 1.05 cm.

The MEA prepared above was set so that an anode catalytic layer (5.1 cm×5.1 cm) was located upper side. Then, the square Hyper sheet (5.1 cm×5.1 cm) prepared above was set at the center thereof so that it overlapped over the peripheral part of the anode catalytic layer. In this state, the second gasket layer prepared above was located with an adhesive layer being downward, so that the opening part of the second gasket layer was located along the peripheral part of the Hyper sheet. After the second gasket layer is provided, the frame-like Hyper sheet prepared above was located along the peripheral part of the Hyper sheet, so that it overlaps on the second gasket layer, to prepare a CCM-gasket layer-Hyper sheet.

### (Formation of first gasket layer 5 at end part of cathode catalytic layer 3')

A PEN film having a urethane-based hot-melt type adhesive layer (produced from Teijin Dupont Film Japan Ltd. : a PEN thickness of 25µm and an adhesive layer thickness of 25 µm) was punched out in overall size of 7.2 cm×7.2 cm. Then, an opening with size of 5.0 cm×5.0 cm was punched out at the center part of the square PEN film, to prepare a frame-like first gasket layer having a frame width of 1.1 cm. Subsequently, a Hyper sheet (produced from Japan Goretex Co., Ltd.; a thickness of.1.5 mm) was punched out in overall size of 5.0 cm×5.0 cm, to prepare a square Hyper sheet. Separately, a Hyper sheet (produced from Japan Goretex Co., Ltd.; a thickness of 1.5 mm) was punched out in overall size of 7.2 cm×7.2 cm, and then an opening with size of 5.0 cm×5.0 cm was punched out at the center part of the square sheet, to prepare a frame-like Hyper sheet having a frame width of 1.1 cm.

The CCM-gasket layer-Hyper sheet prepared by forming the second gasket layer on the anode catalytic layer, was turned over as a unit and set so that a cathode catalytic layer (5.0 cm×5.0 cm) was located at the upper side. Then, similarly as in the above process for "formation of second gasket layer at end part of anode catalytic layer", the square Hyper sheet (5.0 cm×5.0 cm) prepared above was set at the center thereof so that it overlapped over the peripheral part of the anode catalytic layer. In this state, the first gasket layer prepared above was located with an adhesive layer being downward, so that the opening part of the first gasket layer was located along the peripheral part of the Hyper sheet. After the first gasket layer is provided, the frame-like Hyper sheet prepared above was located along the peripheral part of the Hyper sheet, so that it overlaps on the first gasket layer. As a result, the gasket layer and the frame-like Hyper sheet were provided at both sides of anode and cathode of an MEA. Then, the square Hyper sheet located on each catalytic layer was taken off from this unit, and the remaining unit was sandwiched from both sides with SUS plates (size of 7.4 cm×7.4 cm and a thickness of 1 mm), and subjected to thermocompression using a hot press machine at 130°C under 0.4 MPa for 1 minute, to obtain such structure as the end part of the gasket layer and the end part of the catalytic layer closely contacting each other so that gas did not enter into the end part of the catalytic layer contacting with the gasket layer.

### Example 4

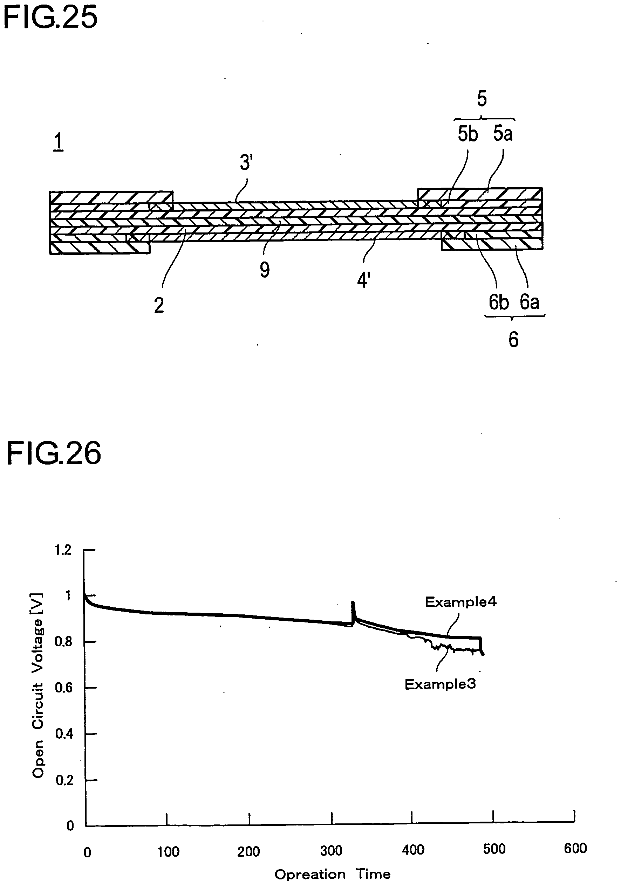

An MEA as shown in Fig. 25 was prepared as follows:

### (Preparation of anode catalytic layer 4')

To carbon carrier (Ketjenblack EC, produced from Ketjen Black International Co., Ltd.; BET surface area=800 m²/g) having Pt particles carried thereon in a concentration of Pt carried of 50% by weight, purified water and propylene glycol were added each in an amount of 3 times weight of the carbon carrier carried with Pt particles. After the mixture was subjected to defoaming under reduced pressure for 5 minutes, 0.5 time weight of n-propyl alcohol was added thereto. Then, a solution containing 20% by weight of Nafion (registered trade name; produced from DuPont Co., Ltd., DE520) as an electrolyte was further added. The solution contained electrolyte at a weight ratio of solid content to the carbon carrier (Carbon (carbon)/Ionomer (electrolyte)) of 1.0/0.9.

The resultant mixed slurry was dispersed by means of an ultrasonic homogenizer and subjected to defoaming under reduced pressure; to prepare catalyst slurry. The resultant catalyst slurry was applied by a screen printing method on one surface of a polytetrafluoroethylene sheet (7.5 cm×7.5 cm, a thickness of 0.08 mm) in an amount so as to give desired thickness, and the coating was dried at 60°C for 24 hours. Size of the anode catalytic layer produced by a screen printing method was set to be 5.2 cm×5.2 cm. In addition, the coating layer on the polytetrafluoroethylene sheet was adjusted so that Pt content was 0.05 mg/cm².

### (Preparation of cathode catalytic layer 3')

To carbon carrier (Ketjenblack EC, produced from Ketjen Black International Co., Ltd. ; BET surface area=800 m²/g) having Pt particles carried thereon in a concentration of Pt carried of 50% by weight, purified water and propylene glycol were added each in an amount of 3 times weight of the carbon carrier carried with Pt particles. After the mixture was subjected to defoaming under reduced pressure for 5 minutes, 0.5 time weight of n-propyl alcohol was added thereto. Then, a solution containing 20% by weight of Nafion (registered trade name; produced from DuPont Co., Ltd., DE520) as an electrolyte was further added. The solution contained electrolyte at a weight ratio of solid content to the carbon carrier (Carbon (carbon)/Ionomer (electrolyte)) of 1.0/0.9.

The resultant mixed slurry was dispersed by means of an ultrasonic homogenizer and subjected to defoaming under reduced pressure, to prepare catalyst slurry. The resultant catalyst slurry was applied by a screen printing method on one surface of a polytetrafluoroethylene sheet (7.5 cm×7.5 cm, a thickness of 0.08 mm) in an amount so as to give desired thickness, and the coating was dried at 60°C for 24 hours. Size of the cathode catalytic layer produced by a screen printing method was set to be 5.1 cm×5.1 cm. In addition, the coating layer on the polytetrafluoroethylene sheet was adjusted so that Pt content was 0.35 mg/cm².

### (Preparation of electrolyte membrane-electrode assembly (MEA) 1)

Using a fluorine-based electrolyte membrane having a reinforcing layer (in Fig. 25, shown by symbol 9) (7.5 cm×7.5 cm, a membrane thickness of 25 µm) as a solid polymer electrolyte membrane, this solid polymer electrolyte membrane was overlapped on the anode catalytic layer formed on polytetrafluoroethylene sheet, and further the cathode catalytic layer formed on polytetrafluoroethylene sheet was overlapped, to obtain a laminate. Then, the laminate was subjected to hot press at 130°C under 2.0 MPa for 10 minutes, and subsequently the polytetrafluoroethylene sheet was peeled off, to make a membrane-electrode assembly.

The cathode catalytic layer transcribed on the solid polymer electrolyte membrane had an amount of Pt carried of 0.4 mg based on an apparent electrode area of 1 cm², and an electrode surface area of 25 cm². The anode catalytic layer had an amount of Pt carried of 0.4 mg based on an apparent electrode area of 1 cm², and electrode surface area of 26 cm².

### (Formation of second gasket layer 6 at end part of anode catalytic layer 4')

A PEN film having a urethane-based hot-melt type adhesive layer (produced from Teijin Dupont Film Japan Ltd.: a PEN thickness of 25µm and an adhesive layer thickness of 25 µm) was punched out in overall size of 7.2 cm×7.2 cm. Then, an opening with size of 5.1 cm×5.1 cm was punched out at the center part of the square PEN film, to prepare a frame-like second gasket layer having a frame width of 1.05 cm. Subsequently, a Hyper sheet (produced from Japan Goretex Co., Ltd.; a thickness of 1.5 mm) was punched out in overall size of 5.1 cm×5.1 cm, to prepare a square Hyper sheet. Separately, a Hyper sheet (produced from Japan Goretex Co., Ltd.; a thickness of 1.5 mm) was punched out in overall size of 7.2 cm×7.2 cm, and then an opening with size of 5.1 cm×5.1 cm was punched out at the center part of the square sheet, to prepare a frame-like Hyper sheet having a frame width of 1.05 cm.

The MEA prepared above was set so that an anode catalytic layer (5.2 cm×5.2 cm) was located upper side. Then, the square Hyper sheet (5.1 cm×5.1 cm) prepared above was set at the center thereof so that the peripheral part of the anode catalytic layer protruded uniformly (0.5 mm). In this state, the second gasket layer prepared above was located with an adhesive layer being downward, so that the opening part of the second gasket layer was located along the peripheral part of the Hyper sheet. After the second gasket layer is provided, the frame-like Hyper sheet prepared above was located along the peripheral part of the Hyper sheet, so that it overlaps on the second gasket layer, to prepare a CCM-gasket layer-Hyper sheet.

### (Formation of first gasket layer 5 at end part of cathode catalytic layer 3')

A PEN film having a urethane-based hot-melt type adhesive layer (produced from Teijin Dupont Film Japan Ltd. : a PEN thickness of 25µm and an adhesive layer thickness of 25 µm) was punched out in overall size of 7.2 cm×7.2 cm. Then, an opening with size of 5.0 cm×5.0 cm was punched out at the center part of the square PEN film, to prepare a frame-like first gasket layer having a frame width of 1.1 cm. Subsequently, a Hyper sheet (produced from Japan Goretex Co., Ltd.; a thickness of 1.5 mm) was punched out in overall size of 5.0 cm×5.0 cm, to prepare a square Hyper sheet. Separately, a Hyper sheet (produced from Japan Goretex Co., Ltd.; a thickness of 1.5 mm) was punched out in overall size of 7.2 cm×7.2 cm, and then an opening with size of 5.0 cm5.0 cm was punched out at the center part of the square sheet, to prepare a frame-like Hyper sheet having a frame width of 1.1 cm.

The CCM-gasket layer-Hyper sheet prepared by forming the second gasket layer on the anode catalytic layer, was turned over as a unit and set so that a cathode catalytic layer (5.1 cm×5.1 cm) was located at the upper side. Then, similarly as in the above process for "formation of second gasket layer at endpart of anode catalytic layer", the square Hyper sheet (5.0 cm×5.0 cm) prepared above was set at the center thereof so that the peripheral part of an anode catalytic layer protruded uniformly (0.5 mm). In this state, the first gasket layer prepared above was located with an adhesive layer being downward, so that the opening part of the first gasket layer was located along the peripheral part of the Hyper sheet. After the first gasket layer is provided, the frame-like Hyper sheet prepared above was located along the peripheral part of the Hyper sheet, so that it overlaps on the first gasket layer. As a result, the gasket layer and the frame-like Hyper sheet were provided at both sides of anode and cathode of an MEA. Then, the square Hyper sheet located on each catalytic layer was taken off fromthis unit, and the remaining unit was sandwiched from both sides with SUS plates (size of 7.4 cm×7.4 cm and a thickness of 1 mm), and subjected to thermocompression using a hot press machine at 130°C under 0.4 MPa for 1 minute, to obtain such structure as holes of catalytic layers were sufficiently filled so that gas did not penetrate into the end part of the catalytic layer overlapped with a gasket layer.

### Example 5: OCV duration test

By following the same procedure as described in Example 2 while using the membrane-electrode assemblies obtained in Examples 3 and 4 instead, unit cells for evaluation were prepared and the unit cell was evaluated for its performance. The results are shown in Fig. 26.

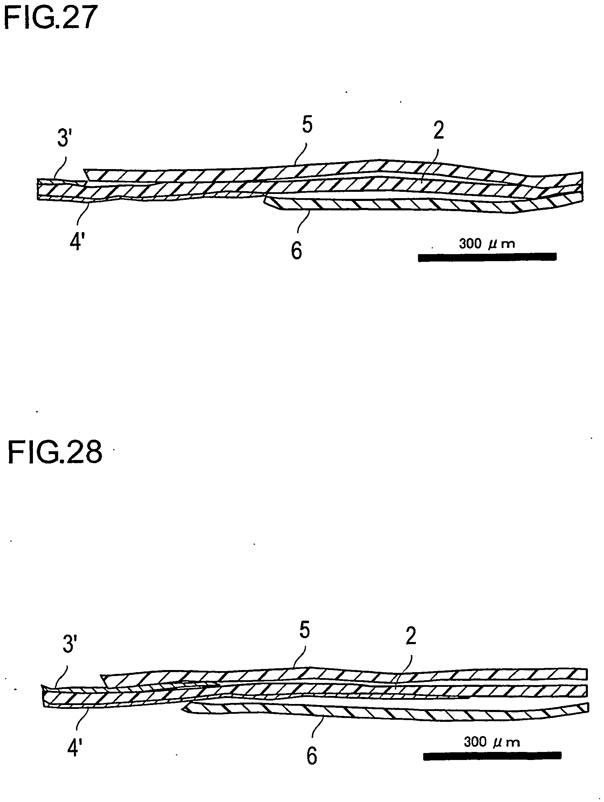

By comparing results in Fig. 23 with those in Fig. 26, unit cells equipped with MEA' s obtained in Examples 3 and 4 showed longer OCV retention time as compared with a unit cell equipped with MEA obtained in Example 1 or unit cells equipped with MEA' s obtained in Comparative Examples 1 to 4. Reasons for this can be considered that because an electrolyte membrane having a reinforcing layer is used in Examples 3 and 4, the reinforcing layer effectively suppress and prevent hole formation in the electrolyte membrane. In addition, as shown in Fig. 27, a unit cell equipped with MEA of Example 3 having the inner part of the gasket layer and the end part of the catalytic layer closely contacted each other without making gap or overlapped part therebetween, manifested unstable OCV at about 395 hours (that is, holes generation). On the other hand, as shown in Fig. 28, a unit cell equipped with MEA of Example 4 having the inner part of the gasket layer overlapped with the end part of the catalytic layer showed sudden decrease in OCV at about 480 hours. From these results, it is noted that OCV retention time can significantly be extended by presence of the overlapped part at the end part of a catalytic layer with the inner part of a gasket layer.

From these results, the MEA's of Examples 3 and 4 were confirmed to be able to further significantly improve OCV durability.

### Example 6

An anode and cathode catalytic layers and further a membrane-electrode assembly (MEA) were prepared by following the method described in Example 4.

### (Formation of second gasket layer 6 at end part of anode catalytic layer 4')

A PEN film having a urethane-based hot-melt type adhesive layer (produced from Teijin Dupont Film Japan Ltd.: a PEN thickness of 25µm and an adhesive layer thickness of 25 µm) was punched out in overall size of 7.2 cm×7.2 cm. Then, an opening with size of 5.1 cm×5.1 cm was punched out at the center part of the square PEN film, to prepare a frame-like second gasket layer having a frame width of 1.05 cm. Subsequently, a Hyper sheet (produced from Japan Goretex Co., Ltd.; a thickness of 1.5 mm) was punched out in overall size of 5.1 cm×5.1 cm, to prepare a square Hyper sheet. Separately, a Hyper sheet (produced from Japan Goretex Co., Ltd.; a thickness of 1.5 mm) was punched out in overall size of 7.2 cm×7.2 cm, and then an opening with size of 5.2 cm×5.2 cm was punched out at the center part of the square sheet, to prepare a frame-like Hyper sheet having a frame width of 1.0 cm.

The MEA prepared above was set so that an anode catalytic layer (5.2 cm×5.2 cm) was located upper side. Then, the square Hyper sheet (5.1 cm×5.1 cm) prepared above was set at the center thereof so that the peripheral part of the anode catalytic layer protruded uniformly (0.5 mm). In this state, the second gasket layer prepared above was located with an adhesive layer being downward, so that the opening part of the second gasket layer was located along the peripheral part of the Hyper sheet. After the second gasket layer is provided, the frame-like Hyper sheet prepared above was located so that it overlaps on the second gasket layer, and located along the peripheral part of the square Hyper sheet so that uniform (0.5 mm) gap was obtained, to prepare a CCM-gasket layer-Hyper sheet.

### (Formation of first gasket layer 5 at end part of cathode catalytic layer 3')

A PEN film having a urethane-based hot-melt type adhesive layer (produced from Teijin Dupont Film Japan Ltd.: a PEN thickness of 25µm and an adhesive layer thickness of 25 µm) was punched out in overall size of 7.2 cm×7.2 cm. Then, an opening with size of 5.0 cm×5.0 cm was punched out at the center part of the square PEN film, to prepare a frame-like first gasket layer having a frame width of 1.1 cm. Subsequently, a Hyper sheet (produced from Japan Goretex Co., Ltd.; a thickness of 1.5 mm) was punched out in overall size of 5.0 cm×5.0 cm, to prepare a square Hyper sheet. Separately, a Hyper sheet (produced from Japan Goretex Co., Ltd.; a thickness of 1.5 mm) was punched out in overall size of 7.2 cm×7.2 cm, and then an opening with size of 5.1 cm×5.1 cm was punched out at the center part of the square sheet, to prepare a frame-like Hyper sheet having a frame width of 1.05 cm.

The CCM-gasket layer-Hyper sheet prepared by forming the second gasket layer on the anode catalytic layer, was turned over as a unit and set so that a cathode catalytic layer (5.1 cm×5.1 cm) was located at the upper side. Then, similarly as in the above process for "formation of second gasket layer at endpart of anode catalytic layer", the square Hyper sheet (5.0 cm×5.0 cm) prepared above was set at the center thereof so that the peripheral part of an anode catalytic layer protruded uniformly (0.5 mm). In this state, the first gasket layer prepared above was located with an adhesive layer being downward, so that the opening part of the first gasket layer was located along the peripheral part of the Hyper sheet. After the first gasket layer is provided, the frame-like Hyper sheet prepared above was located so that it overlaps on the first gasket layer, and located along the peripheral part of the square Hyper sheet so that uniform (0.5 mm) gap was obtained. As a result, the gasket layer and the frame-like Hyper sheet were provided at both sides of anode and cathode of an MEA. Then, the square Hyper sheet located on each catalytic layer was taken off from this unit, and the remaining unit was sandwiched from both sides with SUS plates (size of 7.4 cm×7.4 cm and a thickness of 1 mm), and subjected to thermocompression using a hot press machine at 130°C under 0.4 MPa for 1 minute. In this process, because no pressure was exerted in thermocompression on the overlapped region between the end part of the catalytic layer and the gasket layer, the overlapped region had such structure that adhesive did not enter completely into inside holes, and the holes of a catalytic layer were not completely filled and gas may still enter.

### Example 7: OCV duration test

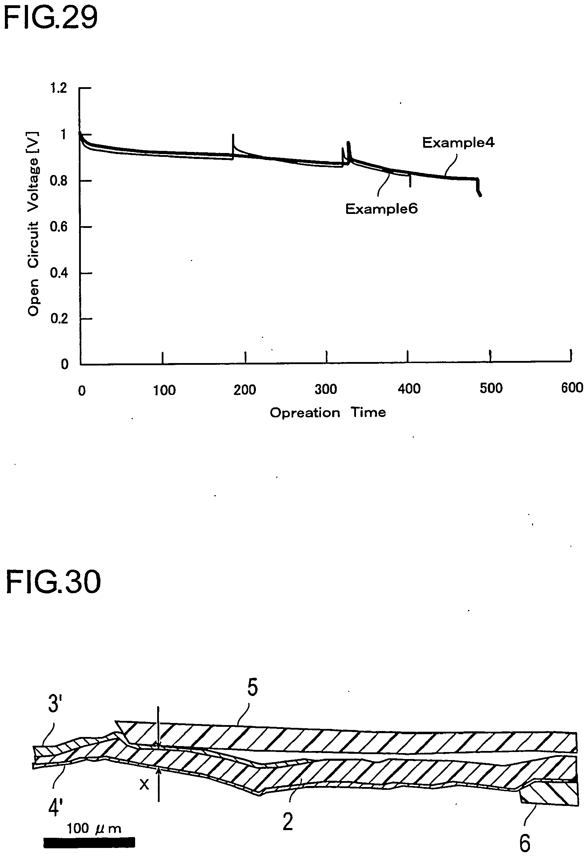

By following the same procedure as described in Example 2 while using the membrane-electrode assemblies obtained in Examples 4 and 6 instead, unit cells for evaluation were prepared and the unit cell was evaluated for its performance. The results are shown in Fig. 29.

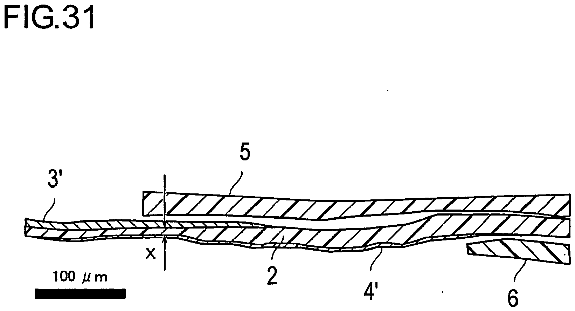

By comparing results in Fig. 23 with those in Fig. 29, unit cells equipped with MEA's obtained in Examples 4 and 6 show longer OCV retention time as compared with a unit cell equipped with MEA obtained in Example 1 or unit cells equipped with MEA's obtained in Comparative Examples 1 to 4. Reasons for this can be considered that because an electrolyte membrane having a reinforcing layer is used in Examples 4 and 6, the reinforcing layer effectively suppress and prevent hole formation in the electrolyte membrane. In addition, as shown in Fig. 29, a unit cell equipped with MEA of Example 4 having the inner part of the gasket layer overlapped with the end part of the catalytic layer, and holes of the catalytic layer at the overlapped region sufficiently filled with adhesive, as shown in Fig. 30, showed sudden decrease in OCV at about 480 hours. On the other hand, a unit cell equipped with MEA of Example 6 having holes of the catalytic layer at the overlapped region not completely filled with adhesive, as shown in Fig. 31, showed sudden decrease in OCV at about 400 hours, which is shorter than that in Example 4. From these results, it is observed that in view of OCV retention, holes of a catalytic layer at the overlapped region between the inner end part of a gasket layer and the end part of a catalytic layer are preferable to be sufficiently filled with adhesive.

From these results, the MEA' s of Examples 4 and 6 were confirmed to be able to further significantly improve OCV durability.

In addition to the test above, membrane thickness ("X" in Figs. 30 and 31) of the overlapped region (region with different impregnation degree of adhesive) between the inner end part of the first gasket layer at the cathode catalytic layer side and the end part of the cathode catalytic layer, was measured after the OCV duration test. The results are shown in the following Table 1. In the following Table 1, "Initial product" means membrane thickness of the corresponding region, before the OCV duration test.

**Table 1**

| | Initial product | Example 4 | Example 6 |
|---|---|---|---|
| Membrane thickness after duration test (µm) | 30 | 22 | 12 |

As shown in Table 1, by comparing membrane thickness after the duration test between an MEA of Example 4 wherein adhesive of the adhesive layer was intentionally impregnated into the cathode catalytic layer at the overlapped region between the end part of the cathode catalytic layer and the inner end part of the gasket layer, and an MEA of Example 6 without such intentional impregnation ("X" in Figs. 31 and 32, respectively), membrane thickness in Example 4 having longer OCV retention (durability) time was 22 µm, which is thicker compared with that in Example 6. The reason is considered as follows: as for MEA of Example 6, because gas (oxygen) reaches as deep as the catalytic layer region, hydrogen peroxide (H₂O₂) is generated at the anode catalytic layer region, which induces membrane deterioration and promotes membrane thinning. On the other hand, as for MEA of Example 4, because adhesive penetrated in the region makes gas impermeable, and thus gas (oxygen) does not reach the region, H₂O₂ generation can be suppressed and the membrane at this region can be prevented from being thinner.

### Industrial Applicability:

The electrolyte membrane-electrode assembly (MEA) of the present invention is applicable to fuel cells having superior durability and good fuel cost.

## Claims

1. An electrolyte membrane-electrode assembly which comprises a polymer electrolyte membrane, a cathode catalytic layer located at one side of the polymer electrolyte membrane, an anode catalytic layer located at the other side of the polymer electrolyte membrane, and a first gasket layer formed in frame-like and overlaps with the end part of the cathode catalytic layer to define area of the effective cathode catalytic layer so that the area of the effective anode catalytic layer is made larger than area of the effective cathode catalytic layer,
which further comprises a second gasket layer formed at the end part of the anode catalytic layer, wherein the length A of the overlapped part between the end part of the cathode catalytic layer and the first gasket layer is 0.2 mm≤A≤2.0 mm, the length B of the overlapping part between the end part of the anode catalytic layer and the second gasket layer is 0.2 mm≤B≤2.0 mm, and the length C between the outer end part of the cathode catalytic layer and the outer end part of the anode catalytic layer in the thickness direction of an electrolyte membrane-electrode assembly, is 2.1 mm≤C≤4.0 mm.

2. An electrolyte membrane-electrode assembly according to claim 1, wherein the end part of the first gasket layer is inserted between the cathode catalytic layer and the polymer electrolyte membrane, or covers the end part of the cathode catalytic layer.

3. An electrolyte membrane-electrode assembly according to claim 1 or 2, wherein (1) the first gasket layer is formed between the cathode catalytic layer and the polymer electrolyte membrane so as to be covered with the end part of the cathode catalytic layer, and the second gasket layer is formed between the anode catalytic layer and the polymer electrolyte membrane so as to be covered with the end part of the anode catalytic layer; (2) the first gasket layer is formed so as to cover the end part of the cathode catalytic layer, and the second gasket layer is formed so as to cover the end part of the anode catalytic layer; or (3) the first gasket layer is formed between the cathode catalytic layer and the polymer electrolyte membrane so as to be covered with the end part of the cathode catalytic layer, and the second gasket layer is formed so as to cover the end part of the anode catalytic layer.

4. An electrolyte membrane-electrode assembly according to any one of claims 1 to 3, wherein the end part of the cathode catalytic layer and the end part of the anode catalytic layer terminate at nearly the same position, in the thickness direction of the electrolyte membrane-electrode assembly.

5. An electrolyte membrane-electrode assembly according to anyone of claims 1 to 3, wherein the end part of the anode catalytic layer terminates over the end part of the cathode catalytic layer, in the thickness direction of the electrolyte membrane-electrode assembly.

6. An electrolyte membrane-electrode assembly according to any one of claims 1 to 5, wherein the first gasket layer comprises a first gas impermeable layer and a first adhesive layer formed thereon.

7. An electrolyte membrane-electrode assembly according to claim 6, wherein the first adhesive layer is formed of a hot-melt type adhesive.

8. An electrolyte membrane-electrode assembly according to claim 6 or 7, wherein the inner end part of the first gas impermeable layer is located outside from the end part of the cathode catalytic layer in the thickness direction of the electrolyte membrane-electrode assembly, and the first adhesive layer is located between the inner end part of the gas impermeable layer and the end part of the cathode catalytic layer.

9. An electrolyte membrane-electrode assembly according to any one of claims 1 to 8, wherein the second gasket layer comprises a second gas impermeable layer and a second adhesive layer formed thereon.

10. An electrolyte membrane-electrode assembly according to claim 9, wherein the second adhesive layer is formed of a hot-melt type adhesive.

11. An electrolyte membrane-electrode assembly according to claim 9 or 10, wherein the inner end part of the second gas impermeable layer is located outside from the end part of the anode catalytic layer in thickness direction of an electrolyte membrane-electrode assembly, and the second adhesive layer is located between the inner end part of the gas impermeable layer and the end part of the anode catalytic layer.

12. An electrolyte membrane-electrode assembly according to any of claims 1 to 11, wherein the length [X (mm)] between the outer end part of the cathode catalytic layer and the inside end of the second gasket layer, in the thickness direction of an electrolyte membrane-electrode assembly, is over 0 (X>0).

13. A method for producing an electrolyte membrane-electrode assembly, which comprises:
a step of forming a first gasket layer formed in frame-like at the surface of a cathode catalytic layer side of a polymer electrolyte membrane, and then forming a cathode catalytic layer, so that the end part of the cathode catalytic layer overlaps with the end part of the gasket layer; and
a step of forming a second gasket layer at the surface of an anode catalytic layer side of the polymer electrolyte membrane, and then forming an anode catalytic layer, so that the end part of the anode catalytic layer overlaps with the end part of the gasket layer; wherein the first gasket layer and the second gasket layer are formed so that area of the effective anode catalytic layer is made larger than area of the effective cathode catalytic layer, and wherein
the second gasket layer is formed such that the length A of the overlapped part between the end part of the cathode catalytic layer and the first gasket layer is 0.2 mm≤A≤2.0 mm, the length B of the overlapping part between the end part of the anode catalytic layer and the second gasket layer is 0.2 mm≤B≤2.0 mm, and the length C between the outer end part of the cathode catalytic layer and the outer end part of the anode catalytic layer in the thickness direction of an electrolyte membrane-electrode assembly, is 2.1 mm≤C≤4.0 mm.

14. A method for producing an electrolyte membrane-electrode assembly, which comprises:
a step of forming a cathode catalytic layer at the surface of a cathode catalytic layer side of a polymer electrolyte membrane, and then forming a first gasket layer formed in frame-like, so as to cover the end part of the cathode catalytic layer; and a step of forming an anode catalytic layer at the surface of an anode catalytic layer side of the polymer electrolyte membrane, and then forming a second gasket layer, so as to cover the end part of the anode catalytic layer;
wherein the first gasket layer and the second gasket layer are formed so that area of the effective anode catalytic layer is made larger than area of the effective cathode catalytic layer; and
a step of forming a second gasket layer at the surface of an anode catalytic layer side of the polymer electrolyte membrane, and then forming an anode catalytic layer, so that the end part of the anode catalytic layer overlaps with the end part of the gasket layer; wherein the first gasket layer and the second gasket layer are formed so that area of the effective anode catalytic layer is made larger than area of the effective cathode catalytic layer, and wherein
the second gasket layer is formed such that the length A of the overlapped part between the end part of the cathode catalytic layer and the first gasket layer is 0.2 mm≤A≤2.0 mm, the length B of the overlapping part between the end part of the anode catalytic layer and the second gasket layer is 0.2 mm≤B≤2.0 mm, and the length C between the outer end part of the cathode catalytic layer and the outer end part of the anode catalytic layer in the thickness direction of an electrolyte membrane-electrode assembly, is 2.1 mm≤C≤4.0 mm.

15. A method for producing an electrolyte membrane-electrode assembly, which comprises:
a step of forming a first gasket layer formed in frame-like at the surface of a cathode catalytic layer side of a polymer electrolyte membrane, and then forming a cathode catalytic layer, so that the end part of the cathode catalytic layer overlaps with the end part of the gasket layer; and
a step of forming an anode catalytic layer at the surface of an anode catalytic layer side of the polymer electrolyte membrane, and then forming a second gasket layer, so as to cover the end part of the anode catalytic layer;
wherein the first gasket layer and the second gasket layer are formed so that area of the effective anode catalytic layer is made larger than area of the effective cathode catalytic layer; and
a step of forming a second gasket layer at the surface of an anode catalytic layer side of the polymer electrolyte membrane, and then forming an anode catalytic layer, so that the end part of the anode catalytic layer overlaps with the end part of the gasket layer; wherein the first gasket layer and the second gasket layer are formed so that area of the effective anode catalytic layer is made larger than area of the effective cathode catalytic layer, and wherein
the second gasket layer is formed such that the length A of the overlapped part between the end part of the cathode catalytic layer and the first gasket layer is 0.2 mm≤A≤2.0 mm, the length B of the overlapping part between the end part of the anode catalytic layer and the second gasket layer is 0.2 mm≤B≤2.0 mm, and the length C between the outer end part of the cathode catalytic layer and the outer end part of the anode catalytic layer in the thickness direction of an electrolyte membrane-electrode assembly, is 2.1 mm≤C≤4.0 mm.

16. A method according to any one of claims 13 to 15, wherein the cathode catalytic layer and the anode catalytic layer are formed so that the end part of the cathode catalytic layer and the end part of the anode catalytic layer terminate at nearly the same position, in the thickness direction of the electrolyte membrane-electrode assembly.

17. A method according to any one of claims 13 to 15, wherein the cathode catalytic layer and the anode catalytic layer are formed so that the end part of the anode catalytic layer terminates over the end part of the cathode catalytic layer, in the thickness direction of the electrolyte membrane-electrode assembly.

18. A fuel cell using an electrolyte membrane-electrode assembly according to any one of claims 1 to 12.

## Patentansprüche

1. Eine Elektrolyt-Membran-Elektronen-Anordnung, die eine Polymer-Elektrolyt-Membran, eine katalytische Kathodenschicht, die auf einer Seite der Polymer-Elektrolyt-Membran angeordnet ist, eine katalytische Anodenschicht, die auf der anderen Seite der Polymer-Elektrolyt-Membran angeordnet ist, und eine erste Dichtungsschicht aufweist, die rahmenartig ausgebildet ist und den Endabschnitt der katalytischen Kathodenschicht überlappt, um einen Bereich der wirksamen katalytischen Kathodenschicht zu bilden, so dass der Bereich der wirksamen katalytischen Anodenschicht größer ist als der Bereich der wirksamen katalytischen Kathodenschicht,
die ferner eine zweite Dichtungsschicht aufweist, die am Endabschnitt der katalytischen Anodenschicht ausgebildet ist, wobei die Länge A des überlappten Bereichs zwischen dem Endabschnitt der katalytischen Kathodenschicht und der ersten Dichtungsschicht 0,2 mm ≤ A ≤ 2,0 mm ist, die Länge B des überlappten Bereichs zwischen dem Endabschnitt der katalytischen Anodenschicht und der zweiten Dichtungsschicht 0,2 mm ≤ B ≤ 2,0 mm ist, und die Länge C zwischen dem äußeren Endabschnitt der katalytischen Kathodenschicht und dem äußeren Endabschnitt der katalytischen Anodenschicht in Dickenrichtung einer Elektrolyt-Membran-Elektroden-Anordnung 2,1 mm ≤ C ≤ 4,0 mm ist.

2. Elektrolyt-Membran-Elektroden-Anordnung gemäß Anspruch 1, wobei der Endabschnitt der ersten Dichtungsschicht zwischen der katalytischen Kathodenschicht und der Polymer-Elektrolyt-Membran eingesetzt ist, oder den Endabschnitt der katalytischen Kathodenschicht abdeckt.

3. Elektrolyt-Membran-Elektroden-Anordnung gemäß Anspruch 1 oder 2, wobei (1) die erste Dichtungsschicht zwischen der katalytischen Kathodenschicht und der Polymer-Elektrolyt-Membran ausgebildet ist, um somit mit dem Endabschnitt der katalytischen Kathodenschicht abgedeckt zu sein, und die zweite Dichtungsschicht zwischen der katalytischen Anodenschicht und der Polymer-Elektrolyt-Membran ausgebildet ist, um somit mit dem Endabschnitt der katalytischen Anodenschicht abgedeckt zu sein; (2) die erste Dichtungsschicht ausgebildet ist, um somit den Endabschnitt der katalytischen Kathodenschicht abzudecken, und die zweite Dichtungsschicht ausgebildet ist, um somit den Endabschnitt der katalytischen Anodenschicht abzudecken; oder (3) die erste Dichtungsschicht zwischen der katalytischen Kathodenschicht und der Polymer-Elektrolyt-Membran ausgebildet ist, um somit mit dem Endabschnitt der katalytischen Kathodenschicht abgedeckt zu sein, und die zweite Dichtungsschicht ausgebildet ist, um somit den Endabschnitt der katalytischen Anodenschicht abzudecken.

4. Elektrolyt-Membran-Elektroden-Anordnung gemäß einem der Ansprüche 1 bis 3, wobei der Endabschnitt der katalytischen Kathodenschicht und der Endabschnitt der katalytischen Anodenschicht an fast der selben Position in Dickenrichtung der Elektrolyt-Membran-Elektroden-Anordnung enden.

5. Elektrolyt-Membran-Elektroden-Anordnung gemäß einem der Ansprüche 1 bis 3, wobei der Endabschnitt der katalytischen Anodenschicht über den Endabschnitt der katalytischen Kathodenschicht hinaus in Dickenrichtung der Elektrolyt-Membran-Elektroden-Anordnung endet.

6. Elektrolyt-Membran-Elektroden-Anordnung gemäß einem der Ansprüche 1 bis 5, wobei die erste Dichtungsschicht eine erste gasundurchlässige Schicht und eine darauf ausgebildete erste Klebeschicht aufweist.

7. Elektrolyt-Membran-Elektroden-Anordnung gemäß Anspruch 6, wobei die erste Klebeschicht aus einem Schmelzklebstoff gebildet wird.

8. Elektrolyt-Membran-Elektroden-Anordnung gemäß Anspruch 6 oder 7, wobei der innere Endabschnitt der ersten gasundurchlässigen Schicht außerhalb vom Endabschnitt der katalytischen Kathodenschicht in Dickenrichtung der Elektrolyt-Membran-Elektroden-Anordnung, und die erste Klebeschicht zwischen dem inneren Endabschnitt der gasundurchlässigen Schicht und Endabschnitt der katalytischen Kathodenschicht angeordnet ist.

9. Elektrolyt-Membran-Elektroden-Anordnung gemäß einem der Ansprüche 1 bis 8, wobei die zweite Dichtungsschicht eine zweite gasundurchlässige Schicht und eine darauf ausgebildete zweite Klebeschicht aufweist.

10. Elektrolyt-Membran-Elektroden-Anordnung gemäß Anspruch 9, wobei die zweite Klebeschicht aus einem Schmelzklebstoff gebildet wird.

11. Elektrolyt-Membran-Elektroden-Anordnung gemäß Anspruch 9 oder 10, wobei der innere Endabschnitt der zweiten gasundurchlässigen Schicht außerhalb vom Endabschnitt der katalytischen Anodenschicht in Dickenrichtung einer Elektrolyt-Membran-Elektroden-Anordnung und die zweite Klebeschicht zwischen dem inneren Endabschnitt der gasundurchlässigen Schicht und Endabschnitt der katalytischen Anodenschicht angeordnet ist.

12. Elektrolyt-Membran-Elektroden-Anordnung gemäß einem der Ansprüche 1 bis 11, wobei die Länge [X(mm)] zwischen dem äußeren Endabschnitt und der katalytischen Kathodenschicht und dem inneren Ende der zweiten Dichtungsschicht in Dickenrichtung einer Elektrolyt-Membran-Elektroden-Anordnung größer 0 ist (X > 0).

13. Verfahren zum Herstellen einer Elektrolyt-Membran-Elektroden-Anordnung, das folgende Verfahrensschritte aufweist:
- einen Schritt zum Ausbilden einer ersten Dichtungsschicht, die rahmenartig an der Oberfläche einer katalytischen Kathodenschichtseite einer Polymer-Elektrolyt-Membran ausgebildet wird, und anschließend Ausbilden einer katalytischen Kathodenschicht, so dass der Endabschnitt der katalytischen Kathodenschicht den Endabschnitt der Dichtungsschicht überlappt; und
- einen Schritt zum Ausbilden einer zweiten Dichtungsschicht an der Oberfläche einer katalytischen Anodenschichtseite der Polymer-Elektrolyt-Membran, und anschließend Ausbilden einer katalytischen Anodenschicht, so dass der Endabschnitt der katalytischen Anodenschicht den Endabschnitt der Dichtungsschicht überlappt; wobei die erste Dichtungsschicht und die zweite Dichtungsschicht ausgebildet sind, so dass der Bereich der wirksamen katalytischen Anodenschicht größer ist als der Bereich der wirksamen katalytischen Kathodenschicht, und wobei
die zweite Dichtungsschicht ausgebildet ist, so dass die Länge A des überlappten Abschnitts zwischen dem Endabschnitt der katalytischen Kathodenschicht und überlappten Abschnitts zwischen dem Endabschnitt der katalytischen Anodenschicht und zweiten Dichtungsschicht 0,2mm ≤ B ≤ 2.0mm ist, und die Länge C zwischen dem äußeren Endabschnitt der katalytischen Kathodenschicht und äußeren Endabschnitt der katalytischen Anodenschicht in Dickenrichtung einer Elektrolyt-Membran-Elektroden-Anordnung 2,1mm ≤ C ≤ 4,0mm ist.

14. Verfahren zum Herstellen einer Elektrolyt-Membran-Elektroden-Anordnung, das folgende Verfahrensschritte aufweist:
einen Schritt zum Ausbilden einer katalytischen Kathodenschicht an der Oberfläche einer katalytischen Kathodenschichtseite einer Polymer-Elektrolyt-Membran, und anschließend Ausbilden einer ersten Dichtungsschicht, die rahmenartig ausgebildet ist, um somit den Endabschnitt der katalytischen Kathodenschicht abzudecken; und einen Schritt zum Ausbilden einer katalytischen Anodenschicht an der Oberfläche einer katalytischen Anodenschichtseite der Polymer-Elektrolyt-Membran, und anschließend Ausbilden einer zweiten Dichtungsschicht, um somit den Endabschnitt der katalytischen Anodenschicht abzudecken;
wobei die erste Dichtungsschicht und die zweite Dichtungsschicht ausgebildet sind, so dass der Bereich der wirksamen katalytischen Anodenschicht größer ist als der Bereich der wirksamen katalytischen Kathodenschicht; und
einen Schritt zum Ausbilden einer zweiten Dichtungsschicht an der Oberfläche einer katalytischen Anodenschichtseite der Polymer-Elektrolyt-Membran, und anschließend Ausbilden einer katalytischen Anodenschicht, so dass der Endabschnitt der katalytischen Anodenschicht den Endabschnitt der Dichtungsschicht überlappt; wobei die erste Dichtungsschicht und zweite Dichtungsschicht ausgebildet sind, so dass der Bereich der wirksamen katalytischen Anodenschicht größer als der Bereich der wirksamen katalytischen Kathodenschicht ist, und wobei
die zweite Dichtungsschicht ausgebildet ist, so dass die Länge A des überlappten Abschnitts zwischen dem Endabschnitt der katalytischen Kathodenschicht und der ersten Dichtungsschicht 0,2mm ≤ A ≤ 2,0mm ist, die Länge B des überlappten Abschnitts zwischen dem Endabschnitt der katalytischen Anodenschicht und der zweiten Dichtungsschicht 0,2mm ≤ B ≤ 2,0mm ist, und die Länge C zwischen den äußeren Endabschnitt der katalytischen Kathodenschicht und dem äußeren Endabschnitt der katalytischen Anodenschicht in Dickenrichtung einer Elektrolyt-Membran-Elektroden-Anordnung 2,1 mm ≤ C ≤ 4,0mm ist.

15. Verfahren zum Herstellen einer Elektrolyt-Membran-Elektroden-Anordnung, das folgende Verfahrensschritte aufweist:
einen Schritt zum Ausbilden einer ersten Dichtungsschicht, die rahmenartig an der Oberfläche einer katalytischen Kathodenschichtseite einer Polymer-Elektrolyt-Membran ausgebildet wird, und anschließend Ausbilden einer katalytischen Kathodenschicht, so dass der Endabschnitt der katalytischen Kathodenschicht den Endabschnitt der Dichtungsschicht überlappt; und einen Schritt zum Ausbilden einer katalytischen Anodenschicht an der Oberfläche einer katalytischen Anodenschichtseite der Polymer-Elektrolyt-Membran, und anschließend Ausbilden einer zweiten Dichtungsschicht, um somit den Endabschnitt der katalytischen Anodenschicht abzudecken; wobei die erste Dichtungsschicht und zweite Dichtungsschicht ausgebildet sind, so dass der Bereich wirksamen katalytischen Anodenschicht größer als der Bereich der wirksamen katalytischen Kathodenschicht ist; und
einen Schritt zum Ausbilden einer zweiten Dichtungsschicht an der Oberfläche einer katalytischen Anodenschichtseite der Polymer-Elektrolyt-Membran, und anschließend Ausbilden einer katalytischen Anodenschicht, so dass der Endabschnitt der katalytischen Anodenschicht den Endabschnitt der Dichtungsschicht überlappt; wobei die erste Dichtungsschicht und zweite Dichtungsschicht ausgebildet sind, so dass der Bereich der wirksamen katalytischen Anodenschicht größer als der Bereich der wirksamen katalytischen Kathodenschicht ist, und wobei
die zweite Dichtungsschicht ausgebildet ist, so dass die Länge A des überlappten Abschnitts zwischen dem Endabschnitt der katalytischen Kathodenschicht und ersten Dichtungsschicht 0,2mm ≤ A ≤ 2,0mm ist, die Länge B des überlappten Abschnitts zwischen dem Endabschnitt der katalytischen Anodenschicht und zweien Dichtungsschicht 0,2mm ≤ B ≤ 2,0mm ist, und die Länge C zwischen den äußeren Endabschnitt der katalytischen Kathodenschicht und äußerem Endabschnitt der katalytischen Anodenschicht in Dickenrichtung einer Elektrolyt-Membran-Elektroden-Anordnung 2,1mm ≤ C ≤ 4,0mm ist.

16. verfahren gemäß einem der Ansprüche 13 bis 15, wobei die katalytische Kathodenschicht und katalytische Anodenschicht ausgebildet sind, so dass der Endabschnitt der katalytischen Kathodenschicht und Endabschnitt der katalytischen Anodenschicht an fast derselben Position in Dickenrichtung der Elektrolyt-Membran-Elektroden-Anordnung enden.

17. Verfahren gemäß einem der Ansprüche 13 bis 15, wobei die katalytische Kathodenschicht und katalytische Anodenschicht ausgebildet sind, so dass der Endabschnitt der katalytischen Anodenschicht über den Endabschnitt der katalytischen Kathodenschicht hinaus in Dickenrichtung der Elektrolyt-Membran-Elektroden-Anordnung endet.

18. Brennstoffzelle, die die Elektrolyt-Membran-Elektroden-Anordnung gemäß einem der Ansprüche 1 bis 12 verwendet.

## Revendications

1. Ensemble d'électrode à membrane électrolyte qui comprend une membrane électrolyte polymère, une couche catalytique de cathode située sur un côté de la membrane électrolyte polymère, une couche catalytique d'anode située sur l'autre côté de la membrane électrolyte polymère, et une première couche de joint formée à la manière d'un cadre et recouvre la partie d'extrémité de la couche catalytique de cathode pour définir la surface de la couche catalytique de cathode efficace de sorte que la surface de la couche catalytique d'anode efficace est plus grande que la surface de la couche catalytique de cathode efficace,
qui comprend en outre une seconde couche de joint formée sur la partie d'extrémité de la couche catalytique d'anode, dans lequel la longueur A de la partie recouverte entre la partie d'extrémité de la couche catalytique de cathode et la première couche de joint est de 0,2 mm ≤ A ≤ 2,0 mm, la longueur B de la partie de recouvrement entre la partie d'extrémité de la couche catalytique d'anode et la seconde couche de joint est de 0,2 mm ≤ B ≤ 2,0 mm, et la longueur C entre la partie d'extrémité externe de la couche catalytique de cathode et la partie d'extrémité externe de la couche catalytique d'anode dans la direction de l'épaisseur d'un ensemble d'électrode à membrane électrolyte, est de 2,1 mm ≤ C ≤ 4,0 mm.

2. Ensemble d'électrode à membrane électrolyte selon la revendication 1, dans lequel la partie d'extrémité de la première couche de joint est insérée entre la couche catalytique de cathode et la membrane électrolyte polymère, ou couvre la partie d'extrémité de la couche catalytique de cathode.

3. Ensemble d'électrode à membrane électrolyte selon la revendication 1 ou 2, dans lequel (1) la première couche de joint est formée entre la couche catalytique de cathode et la membrane électrolyte polymère de sorte à être couverte avec la partie d'extrémité de la couche catalytique de cathode, et la seconde couche de joint est formée entre la couche catalytique d'anode et la membrane électrolyte polymère de sorte à être couverte avec la partie d'extrémité de la couche catalytique d'anode ; (2) la première couche de joint est formée de sorte à couvrir la partie d'extrémité de la couche catalytique de cathode, et la seconde couche de joint est formée de sorte à couvrir la partie d'extrémité de la couche catalytique d'anode ; ou (3) la première couche de joint est formée entre la couche catalytique de cathode et la membrane électrolyte polymère de sorte à être couverte avec la partie d'extrémité de la couche catalytique de cathode, et la seconde couche de joint est formée de sorte à couvrir la partie d'extrémité de la couche catalytique d'anode.

4. Ensemble d'électrode à membrane électrolyte selon l'une quelconque des revendications 1 à 3, dans lequel la partie d'extrémité de la couche catalytique de cathode et la partie d'extrémité de la couche catalytique d'anode se terminent à peu près à la même position, dans la direction de l'épaisseur de l'ensemble d'électrode à membrane électrolyte.

5. Ensemble d'électrode à membrane électrolyte selon l'une quelconque des revendications 1 à 3, dans lequel la partie d'extrémité de la couche catalytique d'anode se termine au-dessus de la partie d'extrémité de la couche catalytique de cathode, dans la direction de l'épaisseur de l'ensemble d'électrode à membrane électrolyte.

6. Ensemble d'électrode à membrane électrolyte selon l'une quelconque des revendications 1 à 5, dans lequel la première couche de joint comprend une première couche imperméable au gaz et une première couche adhésive formée sur celle-ci.

7. Ensemble d'électrode à membrane électrolyte selon la revendication 6, dans lequel la première couche adhésive est formée d'un adhésif de type thermofusible.

8. Ensemble d'électrode à membrane électrolyte selon la revendication 6 ou 7, dans lequel la partie d'extrémité interne de la première couche imperméable au gaz se trouve à l'extérieur de la partie d'extrémité de la couche catalytique de cathode dans la direction de l'épaisseur de l'ensemble d'électrode à membrane électrolyte, et la première couche adhésive se trouve entre la partie d'extrémité interne de la couche imperméable au gaz et la partie d'extrémité de la couche catalytique de cathode.

9. Ensemble d'électrode à membrane électrolyte selon l'une quelconque des revendications 1 à 8, dans lequel la seconde couche de joint comprend une seconde couche imperméable au gaz et une seconde couche adhésive formée sur celle-ci.

10. Ensemble d'électrode à membrane électrolyte selon la revendication 9, dans lequel la seconde couche adhésive est formée d'un adhésif de type thermofusible.

11. Ensemble d'électrode à membrane électrolyte selon la revendication 9 ou 10, dans lequel la partie d'extrémité interne de la seconde couche imperméable au gaz se trouve à l'extérieur de la partie d'extrémité de la couche catalytique d'anode dans la direction de l'épaisseur d'un ensemble d'électrode à membrane électrolyte, et la seconde couche adhésive se trouve entre la partie d'extrémité interne de la couche imperméable au gaz et la partie d'extrémité de la couche catalytique d'anode.

12. Ensemble d'électrode à membrane électrolyte selon l'une quelconque des revendications 1 à 11, dans lequel la longueur [X(mm)] entre la partie d'extrémité externe de la couche catalytique de cathode et l'extrémité interne de la seconde couche de joint, dans la direction de l'épaisseur d'un ensemble d'électrode à membrane électrolyte, est supérieure à 0 (X>0).

13. Procédé de production d'un ensemble d'électrode à membrane électrolyte, comprenant :
une étape de formation d'une première couche de joint à la manière d'un cadre sur la surface d'un côté de couche catalytique de cathode d'une membrane électrolyte polymère, et puis de formation d'une couche catalytique de cathode, de sorte que la partie d'extrémité de la couche catalytique de cathode recouvre la partie d'extrémité de la couche de joint ; et
une étape de formation d'une seconde couche de joint sur la surface d'un côté de couche catalytique d'anode de la membrane électrolyte polymère, et puis de formation d'une couche catalytique d'anode, de sorte que la partie d'extrémité de la couche catalytique d'anode recouvre la partie d'extrémité de la couche de joint ; dans lequel la première couche de joint et la seconde couche de joint sont formées de sorte que la surface de la couche catalytique d'anode efficace est plus grande que la surface de la couche catalytique de cathode efficace, et dans lequel
la seconde couche de joint est formée de telle sorte que la longueur A de la partie recouverte entre la partie d'extrémité de la couche catalytique de cathode et la première couche de joint est de 0,2 mm ≤ A ≤ 2,0 mm, la longueur B de la partie de recouvrement entre la partie d'extrémité de la couche catalytique d'anode et la seconde couche de joint est de 0,2 mm ≤ B ≤ 2,0 mm, et la longueur C entre la partie d'extrémité externe de la couche catalytique de cathode et la partie d'extrémité externe de la couche catalytique d'anode dans la direction de l'épaisseur d'un ensemble d'électrode à membrane électrolyte, est de 2,1 mm ≤ C ≤ 4,0 mm.

14. Procédé de production d'un ensemble d'électrode à membrane électrolyte, qui comprend :
une étape de formation d'une couche catalytique de cathode sur la surface d'un côté de couche catalytique de cathode d'une membrane électrolyte polymère, et puis de formation d'une première couche de joint à la manière d'un cadre, de sorte à couvrir la partie d'extrémité de la couche catalytique de cathode ; et une étape de formation d'une couche catalytique d'anode sur la surface d'un côté de couche catalytique d'anode de la membrane électrolyte polymère, et puis de formation d'une seconde couche de joint, de sorte à couvrir la partie d'extrémité de la couche catalytique d'anode ;
dans lequel la première couche de joint et la seconde couche de joint sont formées de sorte que la surface de la couche catalytique d'anode efficace est plus grande que la surface de la couche catalytique de cathode efficace ; et
une étape de formation d'une seconde couche de joint sur la surface d'un côté de couche catalytique d'anode de la membrane électrolyte polymère, et puis de formation d'une couche catalytique d'anode, de sorte que la partie d'extrémité de la couche catalytique d'anode recouvre la partie d'extrémité de la couche de joint ; dans lequel la première couche de joint et la seconde couche de joint sont formées de sorte que la surface de la couche catalytique d'anode efficace est plus grande que la surface de la couche catalytique de cathode efficace, et dans lequel
la seconde couche de joint est formée de telle sorte que la longueur A de la partie recouverte entre la partie d'extrémité de la couche catalytique de cathode et la première couche de joint est de 0,2 mm ≤ A ≤ 2,0 mm, la longueur B de la partie de recouvrement entre la partie d'extrémité de la couche catalytique d'anode et la seconde couche de joint est de 0,2 mm ≤ B ≤ 2,0 mm, et la longueur C entre la partie d'extrémité externe de la couche catalytique de cathode et la partie d'extrémité externe de la couche catalytique d'anode dans la direction de l'épaisseur d'un ensemble d'électrode à membrane électrolyte, est de 2,1 mm ≤ C ≤ 4,0 mm.

15. Procédé de production d'un ensemble d'électrode à membrane électrolyte, qui comprend :
une étape de formation d'une première couche de joint à la manière d'un cadre sur la surface d'un côté de couche catalytique de cathode d'une membrane électrolyte polymère, et puis de formation d'une couche catalytique de cathode, de sorte que la partie d'extrémité de la couche catalytique de cathode recouvre la partie d'extrémité de la couche de joint ; et
une étape de formation d'une couche catalytique d'anode sur la surface d'un côté de couche catalytique d'anode de la membrane électrolyte polymère, et puis de formation d'une seconde couche de joint, de sorte à couvrir la partie d'extrémité de la couche catalytique d'anode ;
dans lequel la première couche de joint et la seconde couche de joint sont formées de sorte que la surface de la couche catalytique d'anode efficace est plus grande que la surface de la couche catalytique de cathode efficace, et
une étape de formation de seconde couche de joint sur la surface d'un côté de couche catalytique d'anode de la membrane électrolyte polymère, et puis de formation d'une couche catalytique d'anode, de sorte que la partie d'extrémité de la couche catalytique d'anode recouvre la partie d'extrémité de la couche de joint ; dans lequel la première couche de joint et la seconde couche de joint sont formées de sorte que la surface de la couche catalytique d'anode efficace est plus grande que la surface de la couche catalytique de cathode efficace, et dans lequel
la seconde couche de joint est formée de telle sorte que la longueur A de la partie recouverte entre la partie d'extrémité de la couche catalytique de cathode et la première couche de joint est de 0,2 mm ≤ A ≤ 2,0 mm, la longueur B de la partie de recouvrement entre la partie d'extrémité de la couche catalytique d'anode et la seconde couche de joint est de 0,2 mm ≤ B ≤ 2,0 mm, et la longueur C entre la partie d'extrémité externe de la couche catalytique de cathode et la partie d'extrémité externe de la couche catalytique d'anode dans la direction de l'épaisseur d'un ensemble d'électrode à membrane électrolyte, est de 2,1 mm ≤ C ≤ 4,0 mm.

16. Procédé selon l'une quelconque des revendications 13 à 15, dans lequel la couche catalytique de cathode et la couche catalytique d'anode sont formées de sorte que la partie d'extrémité de la couche catalytique de cathode et la partie d'extrémité de la couche catalytique d'anode se terminent à peu près à la même position, dans la direction de l'épaisseur de l'ensemble d'électrode à membrane électrolyte.

17. Procédé selon l'une quelconque des revendications 13 à 15, dans lequel la couche catalytique de cathode et la couche catalytique d'anode sont formées de sorte que la partie d'extrémité de la couche catalytique d'anode se termine au-dessus de la partie d'extrémité de la couche catalytique de cathode, dans la direction de l'épaisseur de l'ensemble d'électrode à membrane électrolyte.

18. Pile à combustible utilisant un ensemble d'électrode à membrane électrolyte selon l'une quelconque des revendications 1 à 12.
